# EUROPÄISCHE PATENTSCHRIFT

(11) **EP 3 996 553 B1**
(45) Veröffentlichungstag und Bekanntmachung des Hinweises auf die Patenterteilung: **07.06.2023**
(21) Anmeldenummer: 20763992.3
(22) Anmeldetag: 07.08.2020
(51) Int. Cl.: A47C 7/56, B60N 2/24, A47C 9/02, B60N 2/30

(54) **KLAPPSITZ FÜR EIN SCHIENENFAHRZEUG**
FOLDING SEAT FOR A RAIL VEHICLE
SIÈGE RABATTABLE POUR VÉHICULE FERROVIAIRE

(30) Priorität: 06.09.2019 DE 102019213595
(43) Veröffentlichungstag der Anmeldung: 18.05.2022
(73) Patentinhaber: Siemens Mobility GmbH, 81739 München (DE)
(72) Erfinder: SCHIEFER, Benno, 40233 Düsseldorf (DE); RIOS SERRANO, Carolina, 52068 Aachen (DE); SCHINDLER, Christian, 41069 Mönchengladbach (DE)
(74) Vertreter: Siemens Patent Attorneys
(86) Internationale Anmeldenummer: PCT/EP2020/072274
(87) Internationale Veröffentlichungsnummer: WO 2021/043531

(56) Entgegenhaltungen:
- WO-A1-2011/089011
- DE-U- 1 929 662
- FR-A1- 2 779 621

## Beschreibung

Die Erfindung bezieht sich auf einen Klappsitz für ein Schienenfahrzeug, umfassend eine Rückenlehne, ein Sitzelement, wobei das Sitzelement zwischen zwei Positionen reversibel hin und her schwenkbar eingerichtet ist,in einer ersten und zweiten Position des Sitzelements das Sitzelement jeweils ausgeklappt ist, sodass der Klappsitz zum Sitzen einer Person auf dem Sitzelement eingerichtet ist, sowie auf ein Klappsitzsystem und ein Schienenfahrzeug.

Ein Klappsitz der eingangs genannten Art ist aus der DE 19 29 662 U bekannt. Dieser Klappsitz hat den Nachteil, dass er für variierendes Personenaufkommen nicht anpassbar ist.

Eine zu lösende Aufgabe besteht darin, einen Klappsitz für ein Schienenfahrzeug anzugeben, der an ein variierendes Personenaufkommen angepasst werden kann. Eine weitere zu lösende Aufgabe besteht darin, ein Klappsitzsystem mit einem solchen Klappsitz anzugeben. Noch eine zu lösende Aufgabe besteht darin, ein Schienenfahrzeug mit einem solchen Klappsitz anzugeben.

Diese Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Gemäß zumindest einer Ausführungsform umfasst der Klappsitz eine Rückenlehne und ein Sitzelement. Das Sitzelement ist zwischen drei Positionen reversibel hin und her schwenkbar eingerichtet. In einer ersten und zweiten Position des Sitzelements ist das Sitzelement jeweils ausgeklappt, sodass der Klappsitz zum Sitzen einer Person auf dem Sitzelement eingerichtet ist. In einer dritten Position des Sitzelements ist das Sitzelement eingeklappt und bildet zusammen mit der Rückenlehne eine Anlehnfläche zum Anlehnen einer stehenden Person. Bezüglich der dritten Position ist das Sitzelement in seiner ersten und zweiten Position in einander entgegengesetzte Richtungen geschwenkt.

Die dritte Position des Sitzelements ist also eine Zwischenposition zwischen der ersten und zweiten Position. Ausgehend von der dritten Position kann das Sitzelement durch Schwenken in eine Richtung in seine erste Position und durch Schwenken in die entgegengesetzte Richtung in die zweite Position überführt werden. Der Klappsitz ist insbesondere so eingerichtet, dass das Sitzelement manuell durch eine Person zwischen den drei Positionen geschwenkt werden kann. Das Schwenken wird bevorzugt nicht elektronisch unterstützt, sondern erfolgt rein manuell. Zwischen den drei Positionen ist das Sitzelement bevorzugt stufenlos schwenkbar.

Das Sitzelement umfasst zum Beispiel zwei einander gegenüberliegende Sitzflächen. Ebenso umfasst die Rückenlehne bevorzugt zwei einander gegenüberliegende Flächen. Bei korrekter Verwendung oder Ausrichtung des Klappsitzes zeigt in der ersten Position des Sitzelements die erste Sitzfläche nach oben, sodass sich eine Person auf die erste Sitzfläche setzen kann und an der ersten Fläche der Rückenlehne anlehnen kann. In der zweiten Position des Sitzelements zeigt die zweite Sitzfläche nach oben, sodass sich eine Person auf die zweite Sitzfläche setzen kann und an der zweiten Fläche der Rückenlehne anlehnen kann. Beispielsweise ist im eingebauten Zustand des Klappsitzes das Sitzelement in der ersten Position in Fahrtrichtung ausgeklappt und in der zweiten Position entgegen der Fahrtrichtung ausgeklappt.

In der dritten Position des Sitzelements ist das Sitzelement eingeklappt. Der Klappsitz dient dann nicht zum Sitzen einer Person, sondern zum beidseitigen Anlehnen einer stehenden Person. Insbesondere bilden dann die zweite Sitzfläche und die erste Fläche der Rückenlehne eine erste Anlehnfläche zum Anlehnen einer stehenden Person. Die erste Sitzfläche und die zweite Fläche der Rückenlehne bilden eine der ersten Anlehnfläche gegenüberliegende zweite Anlehnfläche zum Anlehnen einer weiteren stehenden Person. In der dritten Position des Sitzelements können sich also Personen von zwei einander gegenüberliegenden Seiten gleichzeitig an den Klappsitz anlehnen.

In der dritten Position des Sitzelements erstrecken sich beispielsweise das Sitzelement und die Rückenlehne entlang einer gemeinsamen Ebene, wobei bei korrekter Verwendung oder Ausrichtung des Klappsitzes die gemeinsame Ebene vertikal verläuft. In der ersten und zweiten Position erstreckt sich das Sitzelement beispielsweise entlang einer Ebene, die quer, insbesondere senkrecht, zu einer Haupterstreckungsebene der Rückenlehne verläuft.

Im eingebauten Zustand des Klappsitzes verläuft eine Drehachse des Sitzelements bevorzugt horizontal und besonders bevorzugt quer zur Fahrzeuglängsachse. Die Drehachse des Sitzelements ist die Achse, bezüglich der das Sitzelement beim Schwenken eine reine Rotationsbewegung ausführt. Das Sitzelement ist um die Drehachse drehbar gelagert.

Der hier beschriebenen Erfindung liegt insbesondere die Erkenntnis zu Grunde, dass in Schienenfahrzeugen, insbesondere in Nahverkehrszügen, wie U- oder S-Bahnen, das Personenaufkommen stark variieren kann. Beispielsweise herrscht in Stadtzentren ein hohes Personenaufkommen, wohingegen in Vororten weniger Personen in dem Schienenfahrzeug sind oder in den Stationen zusteigen. Der beschriebene Klappsitz erlaubt eine Nutzung, die an das Personenaufkommen angepasst ist. Bei hohem Personenaufkommen ist die dritte Position des Sitzelements besonders platzsparend und erlaubt das Anlehnen von stehenden Person von zwei einander gegenüberliegenden Seiten. Zudem bewirkt der Klappsitz mit dem Sitzelement in der dritten Position eine Sortierfunktion innerhalb eines Waggons durch entsprechende Zonierung. Nimmt das Personenaufkommen ab, so kann der Klappsitz zum Sitzen einer Person genutzt werden und bietet entsprechend mehr Komfort. Da das Sitzelement in einander gegenüberliegende Richtungen ausschwenkbar oder ausklappbar ist, kann auch dann noch der Platz in dem Schienenfahrzeug optimal genutzt werden. Der Klappsitz kann beidseitig genutzt werden und lässt sich zum Beispiel gezielt in oder gegen die Fahrtrichtung des Zuges ausrichten.

Gemäß zumindest einer Ausführungsform ist die Schwenkbarkeit des Sitzelements elektronisch ein- und ausschaltbar. Bevorzugt ist die Schwenkbarkeit des Klappsitzes durch einen Zugführer elektronisch freigebar. Beispielsweise umfasst der Klappsitz ein Verriegelungssystem, das elektronisch steuerbar ist. Das Verriegelungssystem ist zwischen einem geöffneten und einen geschlossenen Zustand hin und her schaltbar. Im geschlossenen Zustand ist das Verriegelungssystem dazu eingerichtet, den Klappsitz in der dritten Position des Sitzelements zu verriegeln. Ein manuelles Schwenken des Sitzelements in die erste und zweite Position durch eine Person ist dann nicht möglich. Durch Umschalten in den geöffneten Zustand, beispielswiese wenn das Personenaufkommen in dem Schienenfahrzeug entsprechend niedrig ist, wird das Schwenken in die erste und zweite Position freigegeben.

Gemäß zumindest einer Ausführungsform umfasst der Klappsitz eine Arretiervorrichtung zum Arretieren oder Sicheren des Sitzelements in der ersten und/oder zweiten und/oder dritten Position. Die Arretiervorrichtung blockiert die Schwenkbarkeit des Sitzelements. Beispielsweise blockiert die Arretiervorrichtung die Schwenkbarkeit automatisch, sobald das Sitzelement in die erste und/oder zweite und/oder dritte Position geschwenkt ist. Die Arretiervorrichtung ist von einer Person beispielsweise manuell lösbar, wodurch ein Schwenken aus der ersten oder zweiten oder dritten Position freigegeben wird. Dazu ist an dem Klappsitz beispielsweise ein Druckknopf oder ein Hebel vorgesehen, der von einem Fahrgast betätigt werden kann. Die Arretiervorrichtung ist derart mit dem Hebel oder Knopf gekoppelt, dass durch Ziehen des Hebels oder Drücken des Knopfes die Arretiervorrichtung gelöst wird und die Schwenkbarkeit des Sitzelements freigegeben wird.

Bevorzugt ist die Arretiervorrichtung freigebar, zum Beispiel elektronisch durch den Zugführer. Erst wenn die Arretiervorrichtung freigegeben ist, kann eine Person sie manuell lösen.

Gemäß zumindest einer Ausführungsform ist die Rückenlehne zwischen drei Positionen reversibel hin und her schwenkbar. Die Rückenlehne ist bevorzugt stufenlos zwischen den drei Positionen hin und her schwenkbar. Die Drehachse der Rückenlehne, um die die Rückenlehne beim Schwenken rotiert wird, verläuft im eingebauten Zustand des Klappsitzes bevorzugt ebenfalls horizontal, ganz besonders bevorzugt parallel zur Drehachse des Sitzelements. In der dritten Position ist die Rückenlehne bevorzugt hochgestellt beziehungsweise vertikal ausgerichtet. In der ersten und zweiten Position ist die Rückenlehne bezüglich der dritten Position insbesondere in entgegengesetzte Richtungen geschwenkt.

Wie das Sitzelement kann auch die Rückenlehne durch das Verriegelungssystem und/oder die Arretiervorrichtung gesichert beziehungsweise fixiert werden. Durch Öffnen des Verriegelungssystems oder durch Lösen der Arretiervorrichtung kann das Schwenken der Rückenlehne freigegeben werden. Ein versehentliches Schwenken der Rückenlehen durch eine sich anlehnende Person kann so vermieden werden.

Gemäß zumindest einer Ausführungsform korrespondieren die drei Positionen der Rückenlehne mit den drei Positionen des Sitzelements. Das heißt, die erste Position des Sitzelements ist der ersten Position der Rückenlehne zugeordnet, die zweite Position des Sitzelements ist der zweiten Position der Rückenlehne zugeordnet und die dritte Position des Sitzelements ist der dritten Position der Rückenlehne zugeordnet. Beispielsweise ist der Klappsitz so eingerichtet, dass, sobald das Sitzelement sich in einer seiner drei Positionen befindet, sich die Rückenlehne automatisch in der korrespondierenden Position befindet. Die Rückenlehne und das Sitzelement sind in ihren jeweiligen ersten und zweiten Positionen bevorzugt in einander entgegengesetzte Richtungen geschwenkt.

Gemäß zumindest einer Ausführungsform umfasst der Klappsitz ein Rückstellsystem zur Rückstellung der Rückenlehne und/oder des Sitzelements in die dritte Position. Das Rückstellsystem kann automatisch zur Rückstellung der Rückenlehen und/oder des Sitzelements führen, sobald eine Person von dem Sitzelement aufsteht. Bevorzugt ist das Rückstellsystem elektronisch ansteuerbar, zum Beispiel von einem Zugführer, sodass durch elektronische Ansteuerung eine Rückstellung der Rückenlehne und/oder des Stilelements automatisch erfolgt. Das Rückstellsystem umfasst zum Beispiel ein Zug- oder Druckfeder- oder Spiralfedersystem oder einen Motor oder einen Magneten.

Gemäß zumindest einer Ausführungsform sind die Rückenlehne und das Sitzelement unabhängig voneinander zwischen den jeweiligen drei Positionen hin und her schwenkbar. Das heißt, in jeder Position des Sitzelements kann die Rückenlehne frei geschwenkt werden und umgekehrt.

Gemäß zumindest einer Ausführungsform sind die Rückenlehne und das Sitzelement hinsichtlich der jeweiligen Schwenkbewegungen über ein Getriebe, insbesondere über ein Koppelgetriebe, gekoppelt, sodass durch Schwenken der Rückenlehne oder des Sitzelements heraus aus einer der drei jeweiligen Positionen das Schwenken des Sitzelements oder der Rückenlehne erzwungen oder freigegeben wird.

Insbesondere ist das Getriebe so eingerichtet, dass, sobald das Sitzelement in einer seiner drei Positionen ist, die Rückenlehne automatisch in der korrespondierenden Position ist. Beim Schwenken des Sitzelements oder der Rückenlehne heraus aus dessen/ihrer Position wird die Rückenlehne beziehungsweise das Sitzelement dann automatisch heraus aus ihrer/dessen Position geschwenkt. Bevorzugt werden die Rückenlehne und das Sitzelement dann in einander entgegengesetzte Richtungen geschwenkt. Zum Beispiel wird dann weiter durch Schwenken des Sitzelements oder der Rückenlehne in eine weitere Position die Rückenlehne beziehungsweise das Sitzelement automatisch in die korrespondierende Position geschwenkt. Das Getriebe ist bevorzugt symmetrisch, sodass es beim Schwenken des Sitzelements/der Rückenlehne in beide Richtungen gleichermaßen funktioniert.

Alternativ wird erst durch Schwenken des Sitzelements, beispielsweise heraus aus dessen dritter Position, ein Schwenken der Rückenlehne freigegeben. Für diesen Fall umfasst das Getriebe zum Beispiel eine Sperrvorrichtung, die ein Schwenken der Rückenlehne blockiert. Das Getriebe ist bevorzugt so eingerichtet, dass durch Schwenken des Sitzelements heraus aus dessen dritter Position um einen vorgegebenen Schwenkwinkel die Sperrvorrichtung gelöst wird und dadurch ein Schwenken der Rückenlehne freigegeben wird.

Gemäß zumindest einer Ausführungsform umfasst das Getriebe ein Kurbelelement mit einem Stift, eine Sperrvorrichtung und ein geschlitztes Rad. Das Kurbelelement ist starr, das heißt ohne bewegliches Gelenk, mit dem Sitzelement verbunden, sodass beim Schwenken des Sitzelements das Kurbelelement gedreht wird und dabei der Stift entlang einer Kreislinie oder Kreisbahn bewegt wird. In der dritten Position des Sitzelements ist die Sperrvorrichtung in einem Sperrzustand, wodurch das Schwenken der Rückenlehne blockiert ist. Ferner greift in der dritten Position des Sitzelements der Stift in den Schlitz des geschlitzten Rades ein. Das Getriebe ist so eingerichtet, dass beim Schwenken des Sitzelements aus der dritten Position heraus zumindest bis zu einem vorgegebenen Schwenkwinkel der Stift weiter in den Schlitz eingreift und eine Kraft auf das geschlitzte Rad ausübt, wodurch das geschlitzte Rad gedreht wird. Die Sperrvorrichtung ist mit dem geschlitzten Rad derart gekoppelt, dass durch die beim Überschreiten des vorgegebenen Schwenkwinkels korrespondierende Drehung des geschlitzten Rades der Sperrzustand gelöst wird und das Schwenken der Rückenlehne freigegeben wird.

Durch das Drehen des geschlitzten Rades wird insbesondere ein Mechanismus ausgelöst, der, sobald der vorgegebene Schwenkwinkel des Sitzelements überschritten ist, die Sperrvorrichtung löst. Zumindest bis zu dem vorgegebenen Schwenkwinkel sind das Sitzelement und das geschlitzte Rad gekoppelt. Zum Beispiel umfasst die Sperrvorrichtung eine Bremse, die über eine Schubstange mit dem geschlitzten Rad verbunden ist, wobei beim Drehen des geschlitzten Rades die Schubstange linear bewegt wird und dadurch die Bremse löst.

Nach dem Lösen der Sperrvorrichtung ist die Rückenlehne bevorzugt unabhängig von dem Sitzelement schwenkbar. Der vorgegebene Schwenkwinkel beträgt beispielsweise zwischen einschließlich 10° und 45°, beispielsweise 25°.

Nach dem Überschreiten des vorgegebenen Schwenkwinkels kann der Stift den Schlitz verlassen, wodurch das Kurbelelement und das geschlitzte Rad entkoppelt werden. Ein weiteres Drehen des Kurbelelements bewirkt dann keine weitere Drehung des geschlitzten Rades. Mit anderen Worten basiert das Getriebe dann auf dem Funktionsprinzip eines Malteserkreuzgetriebes. Dies ist vorteilhaft, denn dadurch kann die Sperrvorrichtung ebenfalls von dem Kurbelelement entkoppelt werden. Ein weiteres Schwenken des Sitzelements auch weit über den vorgegebenen Schwenkwinkel hinaus führt dann beispielsweise nicht dazu, dass die Sperrvorrichtung wieder in den Sperrzustand überführt wird.

Bevorzugt ist das Getriebe so eingerichtet, dass beim Zurückschwenken des Sitzelements und vor dem Unterschreiten des vorgegebenen Schwenkwinkels, der Stift wieder in den Schlitz eingreift, dadurch bei weiterem Zurückschwenken das geschlitzte Rad zurückgedreht wird und dadurch die Sperrvorrichtung wieder in den Sperrzustand überführt wird.

Das Kurbelelement kann ein Kurbelrad oder eine Kurbel sein. Die Drehachse des Sitzelements verläuft insbesondere durch den Kreismittelpunkt des Kurbelrads oder durch ein Ende der Kurbel. Der Stift ist insbesondere bezüglich der Drehachse des Sitzelements versetzt an dem Kurbelelement und in einem festen Abstand zur Drehachse des Sitzelements befestigt. Dadurch ist die Bewegung entlang der Kreislinie beim Schwenken des Sitzelements gegeben. Eine Haupterstreckungsrichtung des Stifts verläuft beispielsweise parallel zur Drehachse des Sitzelements.

Eine Drehachse des geschlitzten Rads ist insbesondere versetzt zu der Drehachse des Sitzelements, verläuft aber parallel zur Drehachse des Sitzelements. Eine Längsachse des Schlitzes verläuft beispielsweise senkrecht zur Drehachse des Sitzelements. Während der durch den Stift erzwungenen Drehung des geschlitzten Rads bewegt sich der Stift entlang einer Längsachse des Schlitzes.

Gemäß zumindest einer Ausführungsform umfasst das Getriebe ein Kurbelelement mit einem an dem Kurbelelement befestigten Führungselement. Das Kurbelelement ist starr, das heißt ohne bewegliches Gelenk, mit dem Sitzelement verbunden, sodass das Kurbelelement beim Schwenken des Sitzelements gedreht wird. Dabei wird das Führungselement entlang einer Kreislinie bewegt. Die Rückenlehne umfasst einen länglichen Arm, der sich quer zur Drehachse der Rückenlehne erstreckt. Das Führungselement ist mit dem Arm verbunden und ist entlang einer Längsachse des Arms verschiebbar an dem Arm befestigt. Das Getriebe ist so eingerichtet, dass beim Schwenken des Sitzelements das Führungselement entlang der Längsachse des Arms verschoben wird und gleichzeitig eine Hebelkraft auf den Arm ausübt, die ein Schwenken der Rückenlehne um dessen Drehachse erzwingt. Es versteht sich von selbst, dass dieses Getriebe auch in umgekehrter Weise funktioniert, also durch Schwenken der Rückenlehne das Führungselement entlang des Arms verschoben wird und dadurch das Kurbelelement gedreht beziehungsweise das Sitzelement geschwenkt wird.

Das Kurbelelement kann wiederum eine Kurbel oder ein Kurbelrad sein. Das Führungselement ist bezüglich der Drehachse des Sitzelements versetzt und in einem festen Abstand zu der Drehachse des Sitzelements an dem Kurbelelement befestigt, wodurch das Führungselement beim Schwenken des Sitzelements auf die Kreisbahn gezwungen wird. Der Arm der Rückenlehne ist länglich ausgebildet und bildet einen Hebel. In der dritten Position der Rückenlehne und im bestimmungsgemäß eingebauten Zustand des Klappsitzes verläuft die Längsachse des Arms beispielsweise vertikal. Die Längsachse des Arms verläuft insbesondere senkrecht zu den Drehachsen des Sitzelements und der Rückenlehne.

Das Führungselement ist in der dritten Position des Sitzelements bevorzugt beabstandet zu der Drehachse der Rückenlehne an dem Arm befestigt. Wird nun eine Kraft auf das Sitzelement ausgeübt, so wird diese Kraft über das Kurbelelement und das Führungselement auf den Arm übertragen. Die Kreisbewegung des Führungselements ist dadurch ermöglicht, dass das Führungselement linear beweglich an dem Arm befestigt ist und die Rückenlehne zusammen mit dem Arm schwenkbar ist. Mit anderen Worten realisiert das Führungselement ein Schubdrehgelenk zwischen dem Arm und dem Kurbelelement.

Gemäß zumindest einer Ausführungsform ist das Führungselement eine Klammer, die den Arm umgreift und über ein Drehgelenk an dem Kurbelelement befestigt ist. Insbesondere ist die Klammer also bezüglich des Kurbelelements drehbar an dem Kurbelelement befestigt. Die Befestigung ist aber dergestalt, dass der Abstand zur Drehachse des Sitzelements unveränderlich ist. Mit anderen Worten hat die bewegliche Verbindung zwischen der Klammer und dem Kurbelelement nur einen Freiheitsgrad, nämlich die Rotation.

Gemäß zumindest einer Ausführungsform ist das Führungselement ein Stift. Der Arm weist einen länglichen Schlitz auf, der sich entlang der Längsachse des Arms erstreckt. Der Stift greift in den Schlitz ein und ist entlang des Schlitzes verschiebbar gelagert. Der Stift ist beispielsweise starr an dem Kurbelelement befestigt. Eine Längsachse des Stifts verläuft beispielsweise parallel zur Drehachse des Sitzelements.

Gemäß zumindest einer Ausführungsform weist der Arm zumindest einen Anschlag auf, sodass das Führungselement nur bis zu dem Anschlag entlang der Längsachse des Arms verschiebbar ist. Der Anschlag kann beispielsweise durch einen Vorsprung an dem Arm ausgebildet sein, über den das Führungselement, beispielsweise in Form einer Klammer, nicht verschoben werden kann. Ist das Führungselement beispielsweise als Stift ausgebildet, so kann der Anschlag ein Ende des Schlitzes sein, an dem der Stift anschlägt.

Gemäß zumindest einer Ausführungsform schlägt das Führungselement sowohl in der ersten als auch in der zweiten Position des Sitzelements an einem Anschlag an. Insbesondere ist durch den Anschlag verhindert, dass das Sitzelement über die erste oder zweite Position hinaus weg von der dritten Position schwenkbar ist. Zwischen der ersten und der zweiten Position, beispielsweise in der dritten Position, ist das Führungselement bevorzugt von dem Anschlag beabstandet. In der ersten und zweiten Position kann das Führungselement am selben Anschlag anschlagen.

Gemäß zumindest einer Ausführungsform umfasst das Getriebe ein erstes Zahnrad und ein zweites Zahnrad. Das erste Zahnrad ist starr mit dem Sitzelement verbunden, sodass das erste Zahnrad beim Schwenken des Sitzelements gedreht wird. Das zweite Zahnrad ist starr mit der Rückenlehne verbunden, sodass das zweite Zahnrad beim Schwenken der Rückenlehne gedreht wird. Das erste Zahnrad und das zweite Zahnrad greifen ineinander, sodass beim Schwenken des Sitzelements ein Schwenken der Rückenlehne erzwungen wird. Auch bei diesem Getriebe versteht sich von selbst, dass es ebenso in umgekehrter Weise funktioniert, also durch Schwenken der Rückenlehne das Schwenken des Sitzelements erzwungen wird.

Das Übersetzungsverhältnis der beiden Zahnräder ist vorzugsweise so gewählt, dass die Rückenlehne weniger stark geschwenkt wird als das Sitzelement. Beispielsweise wird beim Schwenken des Sitzelements um 45° die Rückenlehne um höchstens 10° und mindestens 5° geschwenkt.

Die maximalen Schwenkwinkel der Rückenlehne und des Sitzelements heraus aus der jeweiligen dritten Position sind beispielsweise durch Anschläge vorgegeben. Die Rückenlehen und das Sitzelement schlagen bei Erreichen der jeweiligen ersten oder zweiten Position an den zugehörigen Anschlägen an.

Bevorzugt weist das zweite Zahnrad nur in einem Kreissegment Zähne auf, wobei der Winkel des Kreissegments kleiner 360°, bevorzugt kleiner 180°, besonders bevorzugt kleiner 100° ist. Die gekoppelte Drehung beider Zahnräder ist auf dieses Kreissegment beschränkt.

Bei der Ausführung des Getriebes mit zwei Zahnrädern sind die Drehachsen des Sitzelements und der Rückenlehne bevorzugt an festen Positionen. Das heißt, im eingebauten Zustand des Klappsitzes ändern sich die Positionen der Drehachsen beim Schwenken nicht. Insbesondere bleibt der Abstand zwischen den Drehachsen beim Schwenken immer gleich.

Gemäß zumindest einer Ausführungsform umfasst das Getriebe ein erstes Zahnrad und eine Zahnstange. Das erste Zahnrad ist starr mit dem Sitzelement verbunden, sodass das erste Zahnrad beim Schwenken des Sitzelements gedreht wird. Die Rückenlehne umfasst einen Arm, der sich quer zur Drehachse der Rückenlehne erstreckt. Das erste Zahnrad ist über ein Drehgelenk beabstandet zur Drehachse der Rückenlehne mit dem Arm verbunden.

Das erste Zahnrad greift in die Zahnstange ein. Das Getriebe ist so eingerichtet, dass beim Schwenken des Sitzelements das erste Zahnrad in eine Bewegung entlang der Zahnstange gezwungen wird und dabei eine Hebelkraft auf den Arm ausübt, die ein Schwenken der Rückenlehne erzwingt. Auch bei diesem Getriebe versteht sich von selbst, dass es ebenso in umgekehrter Weise funktioniert, also durch Schwenken der Rückenlehne das Schwenken des Sitzelements erzwungen wird.

Die Zahnstange ist bevorzugt kreisbogenförmig ausgestaltet beziehungsweise erstreckt sich entlang eines Kreisbogens. Besonders bevorzugt verläuft der Kreismittelpunkt des Kreisbogens konzentrisch mit der Drehachse der Rückenlehne. Das erste Zahnrad wird dann also in eine Kreisbewegung entlang dieses Kreisbogens gezwungen.

Auch hier ist das Übersetzungsverhältnis vorzugsweise so gewählt, dass die Rückenlehne weniger stark geschwenkt wird als das Sitzelement. Beispielsweise wird beim Schwenken des Sitzelements um 45° die Rückenlehne um höchstens 10° und mindestens 5° geschwenkt.

Die maximalen Schwenkwinkel der Rückenlehne und des Sitzelements heraus aus der jeweiligen dritten Position sind bevorzugt auch hier durch Anschläge vorgegeben. Die Rückenlehen und das Sitzelement schlagen bei Erreichen der jeweiligen ersten oder zweiten Position an den zugehörigen Anschlägen an.

Bei der Ausgestaltung mit einer Zahnstange und einem ersten Zahnrad sind die Drehachsen des Sitzelements und der Rückenlehne bevorzugt zueinander versetzt. Im eingebauten Zustand des Klappsitzes bleibt die Drehachse der Rückenlehne beim Schwenken bevorzugt an einer festen Position, wohingegen die Drehachse des Sitzelements verschoben wird. Insbesondere wird die Drehachse des Sitzelements entgegen der Richtung verschoben beziehungsweise rotiert, in die das Sitzelement geschwenkt wird. Dadurch wird der Sitzkomfort in der ersten und zweiten Position des Sitzelements erhöht.

Gemäß zumindest einer Ausführungsform ist das Sitzelement aus seiner dritten Position heraus jeweils um zumindest 80° oder zumindest 85° in einander entgegengesetzte Richtungen schwenkbar. Die Rückenlehne ist aus ihrer dritten Position heraus jeweils um zumindest 5° oder zumindest 10° in einander entgegengesetzte Richtungen schwenkbar. Alternativ oder zusätzlich ist die Rückenlehne jeweils um höchstens 30° oder höchstens 20° in die einander entgegengesetzten Richtungen schwenkbar.

Bevorzugt ist das Sitzelement ausgehend von der dritten Position um jeweils höchstens 95° oder höchstens 90° in die einander entgegengesetzten Richtungen schwenkbar. In der ersten und zweiten Position ist das Sitzelement um den maximal möglichen Schwenkwinkel bezüglich der dritten Position geschwenkt. Die erste und zweite Position der Rückenlehne entsprechen den maximalen Schwenkwinkeln der Rückenlehne bezüglich ihrer dritten Position.

Gemäß zumindest einer Ausführungsform umfasst der Klappsitz ein Cantilever zur seitlichen Befestigung des Klappsitzes an einer Seitenwand eines Schienenfahrzeuges. Bevorzugt ist das Cantilever zur freischwebenden oder freihängenden Befestigung des Klappsitzes an der Seitenwand eingerichtet. Es wird also kein zusätzliches Stützelement zur Verbindung des Klappsitzes zum Boden benötigt. Unter einem Cantilver wird ein Kragträger oder Ausleger verstanden. Der Cantilever kann zum Beispiel als Rohr ausgestaltet sein.

Gemäß zumindest einer Ausführungsform verläuft eine Drehachse der Rückenlehne durch den Cantilever, insbesondere parallel zur Längsachse des Cantilevers. Selbiges kann für die Drehachse des Sitzelements gelten. Ganz besonders bevorzugt sind die Drehachse der Rückenlehne und/oder des Sitzelements und die Längsachse des Cantilevers identisch. Der Cantilever dient in diesem Fall zum Beispiel sowohl als Drehachse für die Rückenlehne, als auch als Stützachse im Sinne einer freihängenden/freischwebenden Befestigung an der Seitenwand.

Als nächstes wird das Klappsitzsystem angegeben. Das Klappsitzsystem umfasst zumindest zwei der hier beschriebenen Klappsitze. Die Klappsitze sind miteinander verbunden, insbesondere fest und dauerhaft miteinander verbunden. Insbesondere sind die Klappsitze in einer Querrichtung nebeneinander angeordnet, wobei die Querrichtung parallel zu den Drehachsen der Sitzelemente/Rückenlehnen verläuft. Zum Beispiel umfassen und nutzen die Klappsitze einen gemeinsamen Cantilver. Mit den hier beschriebenen Klappsitzen können bei einem solchen Klappsitzsystem zwei Personen in einander entgegengesetzte Richtungen auf benachbarten Klappsitzen sitzen. Mit anderen Worten sind die Sitzelemente und/oder die Rückenlehnen der Klappsitze des Klappsitzsystems unabhängig voneinander schwenkbar.

Als nächstes wird das Schienenfahrzeug angegeben. Das Schienenfahrzeug umfasst einen hier beschriebenen Klappsitz und/oder ein hier beschriebenes Klappsitzsystem. Bevorzugt umfasst das Schienenfahrzeug mehrere der hier beschriebenen Klappsitze. Bei dem Schienenfahrzeug handelt es sich insbesondere um einen Waggon eines Zuges, zum Beispiel eines Personentransportzuges, wie zum Beispiel einer S-Bahn oder U-Bahn oder einem Regionalzug. Der oder die Klappsitze sind insbesondere in dem Schienenfahrzeug fest montiert. Beispielsweise ist der zumindest ein Klappsitz auf dem Boden des Schienenfahrzeugs angeschraubt. In diesem Fall umfasst der Klappsitz bevorzugt Füße, die auf dem Boden des Schienenfahrzeugs aufliegen. Alternativ kann der Klappsitz auch an einer Seitenwand des Schienenfahrzeugs montiert sein und frei über dem Boden hängen. In diesem Fall umfasst der Klappsitz bevorzugt ein Cantileverrohr, das an der Wand des Schienenfahrzeugs befestigt ist, beispielsweise angeschraubt ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht grundsätzlich als maßstäblich zu betrachten. Vielmehr können einzelne Elemente zur besseren Darstellbarkeit und/oder für eine bessere Verständlichkeit übertrieben groß dargestellt sein.

Es zeigen:
Figuren 1 bis 10 Ausführungsbeispiele des Klappsitzsystems in verschiedenen Positionen,
Figur 11 ein Ausführungsbeispiel eines Schienenfahrzeuges,
Figuren 12 bis 45 Ausführungsbeispiele des Klappsitzes in verschiedenen Ansichten und Detailansichten.

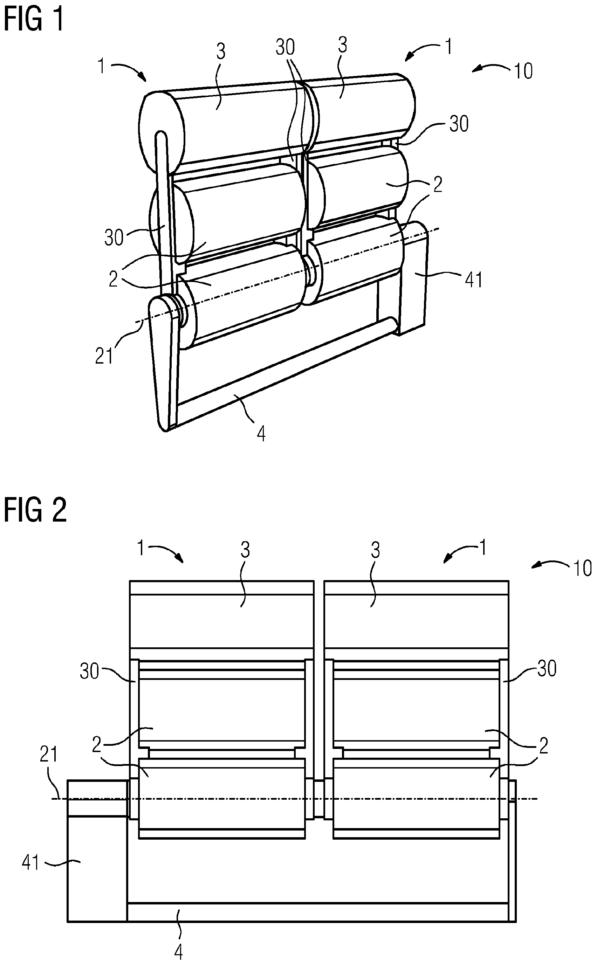

Die Figuren 1 bis 3 zeigen ein erstes Ausführungsbeispiel eines Klappsitzsystems 10 mit zwei Klappsitzen 1. Jeder Klappsitz 1 umfasst ein Sitzelement 2 und eine Rückenlehne 3.

Das Sitzelement 2 und die Rückenlehne 3 umfassen insbesondere jeweils gepolsterte Abschnitte, die ein komfortables Sitzen oder Anlehnen ermöglichen. Vorliegend umfasst die Rückenlehne 3 einen gepolsterten Abschnitt, das Sitzelement 2 zwei gepolsterte Abschnitte. Die Rückenlehnen 3 umfassen neben dem gepolsterten Abschnitt jeweils zwei längliche Arme 30.

Ferner umfasst das Klappsitzsystem 10 ein seitliches Befestigungselement 41, mit dem das Klappsitzsystem 10 beispielsweise an einer Wand, insbesondere an einer Wand eines Schienenfahrzeuges, befestigbar ist. Ein Fußelement 4 des Klappsitzsystems 10 dient als Fußablage für eine Person und/oder als zusätzliche statische Abstützung bei einer seitlichen Befestigung an einer Wand.

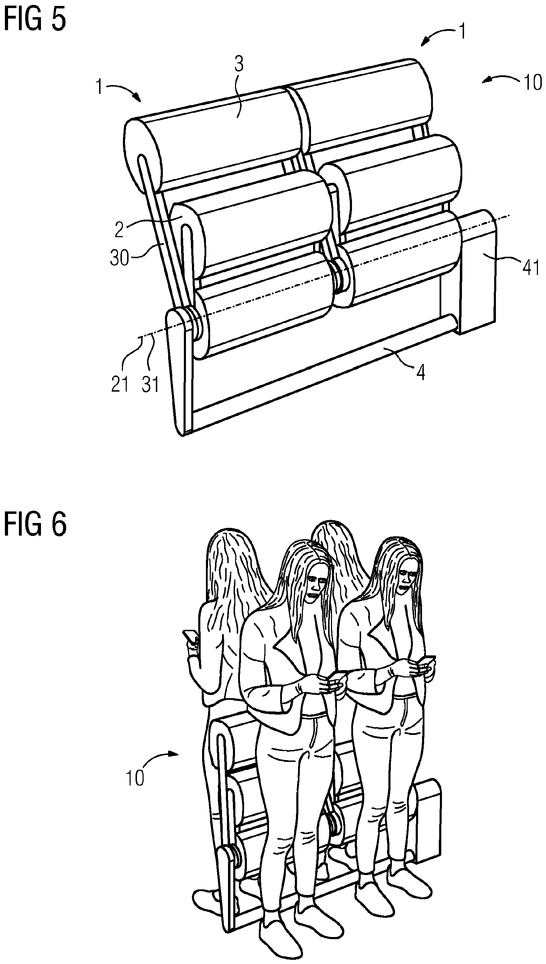

In der Figur 1 sind die Klappsitze 1 jeweils zum Anlehnen einer stehenden Person eingerichtet. Insbesondere kann sich eine Person an beiden Seiten jedes Klappsitzes 1 anlehnen, wie es zum Beispiel auch in der Figur 6 dargestellt ist. Dazu sind die Sitzelemente 2 jeweils in einer eingeklappten beziehungsweise hochgeklappten, dritten Position, in der das Sitzelement 2und die Rückenlehne 3 eines Klappsitzes 1 in einer gemeinsamen, vertikalen Ebene verlaufen und so eine Anlehnfläche bilden. In der Figur 2 ist eine Frontsicht auf die Anlehnflächen gezeigt.

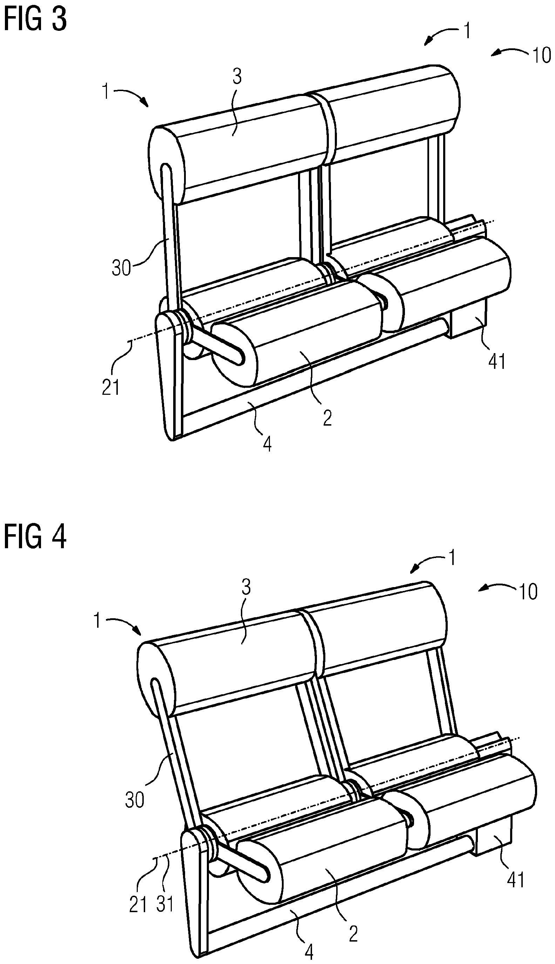

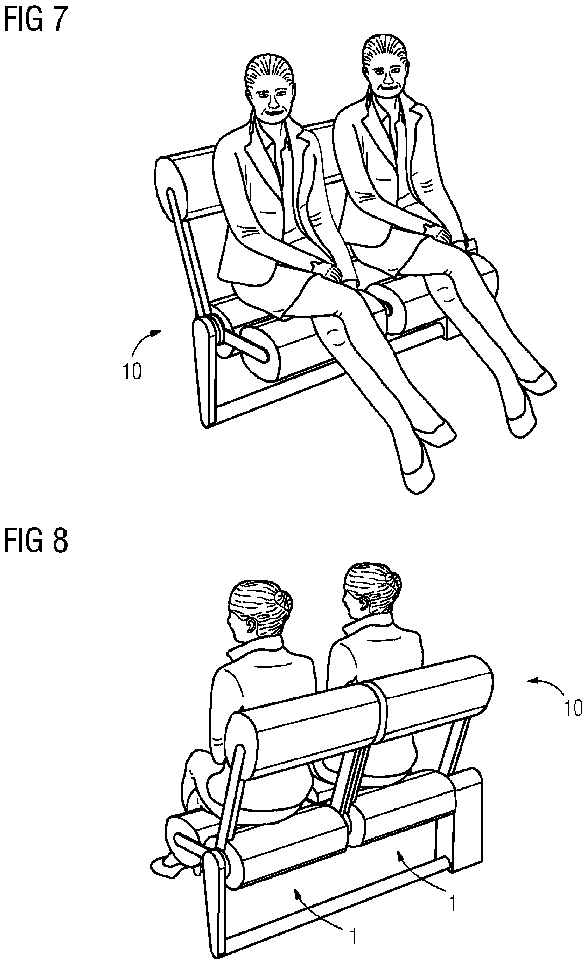

In der Figur 3 ist das Klappsitzsystem 10 der Figuren 1 und 2 gezeigt, bei dem sich die Sitzelemente 2 jeweils in einer ausgeklappten, ersten Position befinden. Dabei wurden die Sitzelemente 2 von der dritten Position in die erste Position geschwenkt. Die Drehachse 21 der Sitzelemente 2 ist als gestrichelte Linie eingezeichnet und verläuft durch einen Abschnitt des Sitzelements 2. Für den Übergang von der dritten Position in die erste Position wurden die Sitzelemente 2 beispielsweise jeweils um zirka 90° geschwenkt. In diesem ausgeklappten Zustand der Sitzelemente 2 dienen die Klappsitze 1 zum Sitzen einer Person, wie es beispielsweise auch in Figur 7 dargestellt ist.

In dem ersten Ausführungsbeispiel des Klappsitzsystems 10 der Figuren 1 bis 3 sind die Rückenlehnen 3 unbeweglich eingerichtet. Die Rückenlehnen 3 befinden sich durchweg jeweils in einer aufrechten, dritten Position, unabhängig von der Position der Sitzelemente 2.

In den Figuren 4 bis 10 ist ein zweites Ausführungsbeispiel des Klappsitzsystems 10 gezeigt, bei dem die Klappsitze 1 jeweils schwenkbare Rückenlehnen 3 aufweisen.

In der Figur 4 befinden sich die Rückenlehnen 3 jeweils in einer ersten Position, die mit der ersten Position der Sitzelemente 2 korrespondiert. In dieser ersten Position sind die Rückenlehnen 3 in entgegengesetzter Richtung zu den Sitzelementen 2 ausgeklappt. Beispielsweise sind die Rückenlehnen 3 jeweils um einen Winkel von zirka 17° bezüglich der aufrechten, dritten Position geschwenkt. Dadurch ist der Komfort beim Sitzen erhöht. Wie in der Figur 4 zu erkennen ist, fallen in diesem Ausführungsbeispiel die Drehachsen 31 der Rückenlehnen 3 und die Drehachsen 21 der Sitzelemente 2 zusammen.

In der Figur 5 ist das Klappsitzsystem 10 der Figur 4 gezeigt, wobei die Sitzelemente 2 wieder hoch geklappt in ihrer dritten Position sind. Die Rückenlehnen 3 hingegen sind nach wie vor jeweils in ihrer ausgeklappten, ersten Position. Insbesondere sind in dem Ausführungsbeispiel der Figuren 4 und 5 die Rückenlehnen 3 und die Sitzelemente 2 unabhängig voneinander schwenkbar.

In der Figur 8 ist das Ausführungsbeispiel des Klappsitzsystems 10 gezeigt, bei dem die Sitzelemente 2 sich jeweils in einer zweiten Position befinden. In dieser zweiten Position sind die Sitzelemente 2 in eine entgegengesetzte Richtung geschwenkt als in der ersten Position. Bezüglich der dritten Position sind dabei die Sitzelemente 2 beispielsweise wiederum um zirka 90° geschwenkt. Außerdem ist in der Figur 8 zu sehen, dass auch die Rückenlehnen 3 in einer korrespondierenden zweiten Position sind, in der die Rückenlehnen 3 in eine gegenüber der ersten Position entgegengesetzte Richtung geschwenkt sind. Auch hier sind die Rückenlehnen 3 beispielsweise um zirka 17° geschwenkt. Die Klappsitze 1 können also aus entgegengesetzten Richtungen entweder zum stehenden Anlehnen oder zum Sitzen genutzt werden.

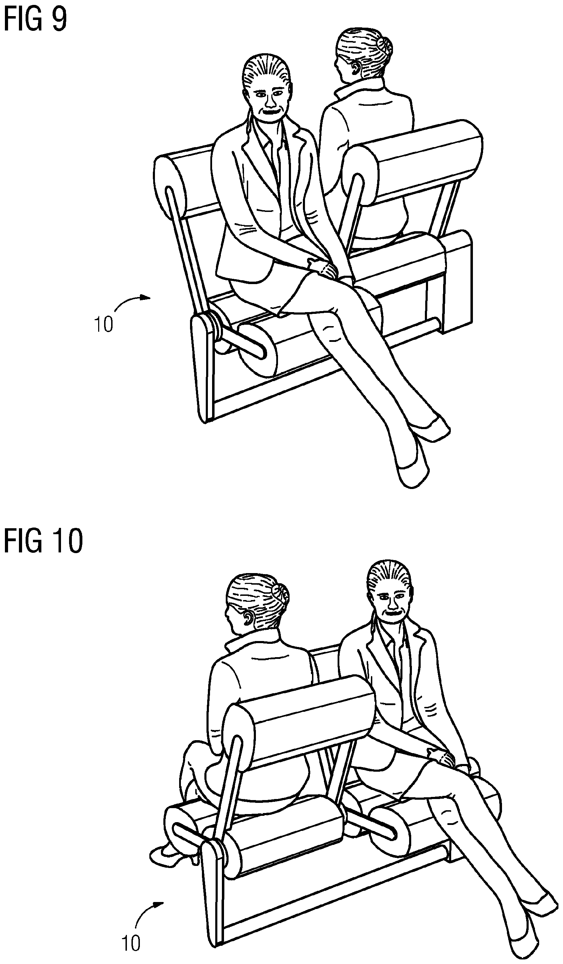

In der Figur 9 ist das zweite Ausführungsbeispiel des Klappsitzsystems 10 gezeigt, bei dem die Klappsitze 1 aus unterschiedlichen Richtungen genutzt werden. Bei dem ersten Klappsitz 1 befinden sich sowohl das Sitzelement 2 als auch die Rückenlehne 1 in ihrer jeweiligen ersten Position. Beim zweiten Klappsitz 1 befinden sich das Sitzelement 2 und die Rückenlehne 3 in ihrer jeweiligen zweiten Position. Die auf den Klappsitzen 1 sitzenden Personen schauen in entgegengesetzte Richtungen, beispielsweise einmal in und einmal entgegen einer Fahrtrichtung.

In der Figur 10 sind die Sitzelemente 2 und entsprechend die Rückenlehnen 3 gegenüber der Figur 9 in die jeweils andere Richtung ausgeklappt.

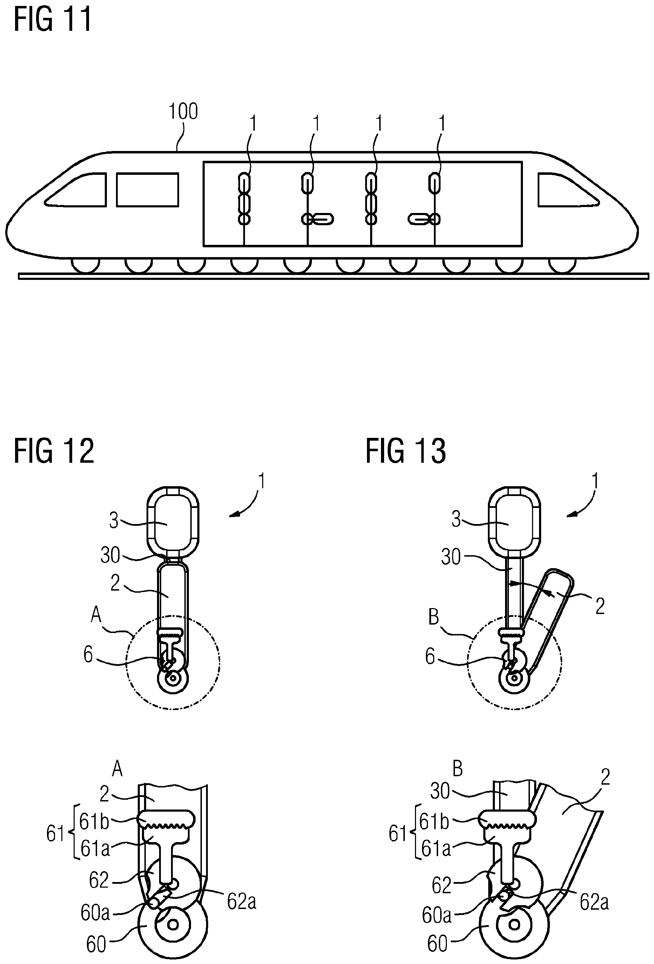

In der Figur 11 ist ein Ausführungsbeispiel eines Schienenfahrzeuges 100 gezeigt. Bei dem Schienenfahrzeug 100 handelt es sich beispielsweise um einen Waggon eines Personentransportzuges. In dem Schienenfahrzeug 100 sind eine Vielzahl der Klappsitze 1, wie sie beispielsweise im Zusammenhang mit den vorherigen und den nachfolgenden Ausführungsbeispielen beschrieben wurden/werden, fest montiert. Beispielsweise sind die Klappsitze 1 über die Befestigungselemente 41 oder über ein Cantilever in dem Schienenfahrzeug 1 montiert. In der Figur 11 ist zu erkennen, dass bei zwei Klappsitzen 1 die Sitzelemente 2 ausgeklappt sind, einmal in und einmal entgegen der Fahrtrichtung, und bei zwei weiteren Klappsitzen 1 befinden sich die Sitzelemente 2 in der eingeklappten, dritten Position, in der die Klappsitze 1 zum Anlehnen einer stehenden Person eingerichtet sind.

In den Figuren 12 bis 16 ist ein weiteres Ausführungsbeispiel des Klappsitzes 1 gezeigt, bei dem das Sitzelement 2 und die Rückenlehne 3 über ein spezielles Getriebe 6 miteinander gekoppelt sind. Dadurch sind anders als in den vorherigen Ausführungsbeispielen die Schwenkbewegungen des Sitzelements 2 und der Rückenlehne 3 nicht mehr unabhängig voneinander, sondern durch das Getriebe 6 miteinander gekoppelt.

In der Figur 12 befinden sich die Rückenlehne 3 und das Sitzelement 2 jeweils in ihrer dritten Position. Die Rückenlehne 3 ist also aufrecht gestellt und das Sitzelement 2 ist hochgeklappt oder eingeklappt. Ein Fahrgast kann sich nun stehend von beiden Seiten an den Klappsitz 1 anlehnen.

Im unteren Teil der Figur 12 ist das Getriebe 6 detailliert dargestellt. Das Getriebe 6 umfasst ein Kurbelrad 60, von dem ein Stift 60a hervorsteht. Dass Kurbelrad 60 ist, starr mit dem Sitzelement 2 verbunden, sodass beim Schwenken des Sitzelements 2 das Kurbelrad 60 gedreht wird. Ferner umfasst das Getriebe 6 ein geschlitztes Rad 62 mit einem länglichen Schlitz 62a. In der dritten Position des Sitzelements 2 und der Rückenlehne 3 greift der Stift 60a in den Schlitz 62a ein, wodurch das Kurbelrad 60 und das geschlitzte Rad 62 mechanisch miteinander gekoppelt sind.

Das geschlitzte Rad 62 wiederum ist mit einer Sperrvorrichtung 61 gekoppelt. Die Sperrvorrichtung 61 umfasst eine erste Zahnstange 61a und eine zweite Zahnstange 61b. Die zweite Zahnstange 61b ist starr mit der Rückenlehne 3 verbunden, wohingegen die erste Zahnstange 61a über eine Schubstange und ein Drehgelenk mit dem geschlitzten Rad 62 verbunden ist. In der dritten Position der Rückenlehne 3 und des Sitzelements 2 greifen die beiden Zahnstangen 61a, 61b ineinander. Dadurch ist ein Schwenken der Rückenlehne 3 blockiert. Ein Schwenken der Rückenlehne 3 würde ein horizontales beziehungsweise kreisbogenförmiges Verschieben der zweiten Zahnstange 61b gegenüber der ersten Zahnstange 61a erfordern, was durch das Ineinandergreifen der beiden Zahnstangen 61a, 61b aber nicht möglich ist.

In der Figur 13 ist das Sitzelement 2 aus seiner dritten Position heraus um einen vorgegebenen Schwenkwinkel, der hier beispielsweise 25° beträgt, geschwenkt. Die Rückenlehne 3 ist noch in ihrer dritten Position. Beim Schwenken des Sitzelements 2 hat sich das Kurbelrad 60 mit dem Stift 60a mitgedreht. Der Stift 60a ist dabei stets innerhalb des Schlitzes 62a verblieben und hat dadurch eine Kraft beziehungsweise ein Drehmoment auf das geschlitzte Rad 62 übertragen, wodurch gleichzeitig mit dem Kurbelrad 60 das geschlitzte Rad 62 gedreht wurde. Über das Drehgelenk und die Schubstange wurde dabei die erste Zahnstange 61a bezüglich der zweiten Zahnstange 61b in vertikaler Richtung auseinandergeschoben. Dadurch wurde das zahnartige Ineinandergreifen der ersten Zahnstange 61a und der zweiten Zahnstange 61b soweit gelöst, dass nun auch eine horizontale beziehungsweise kreisbogenförmiges Bewegung der zweiten Zahnstange 61b gegenüber der ersten Zahnstange 61a möglich ist. Folglich ist das Schwenken der Rückenlehne 3 nun freigegeben. Insbesondere kann nun die Rückenlehne 3 unabhängig von dem Sitzelement 2 geschwenkt werden.

In anderen Worten sind das Sitzelement 2 und die Rückenlehne 3 über das Getriebe 6 derart gekoppelt, dass ein Schwenken der Rückenlehne 3 erst freigegeben wird, wenn das Sitzelement 2 um zumindest den vorgegebenen Schwenkwinkel aus der dritten Position heraus geschwenkt ist.

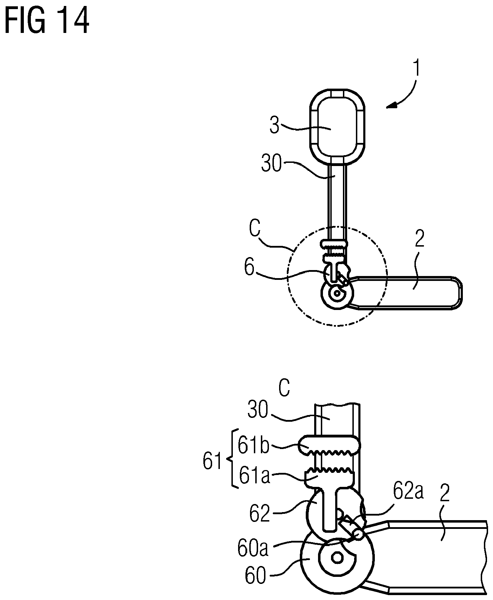

In der Figur 14 ist der Klappsitz 1 gezeigt, nachdem das Sitzelement 2 vollständig bis in seine erste Position ausgeklappt wurde. Auch bis dahin hat der Stift 60a weiter in den Schlitz 62a gegriffen und das geschlitzte Rad 62 wurde gleichzeitig mit dem Kurbelrad 60 mitgedreht. Der vertikale Abstand zwischen den beiden Zahnstangen 61a, 61b hat sich dadurch weiter erhöht.

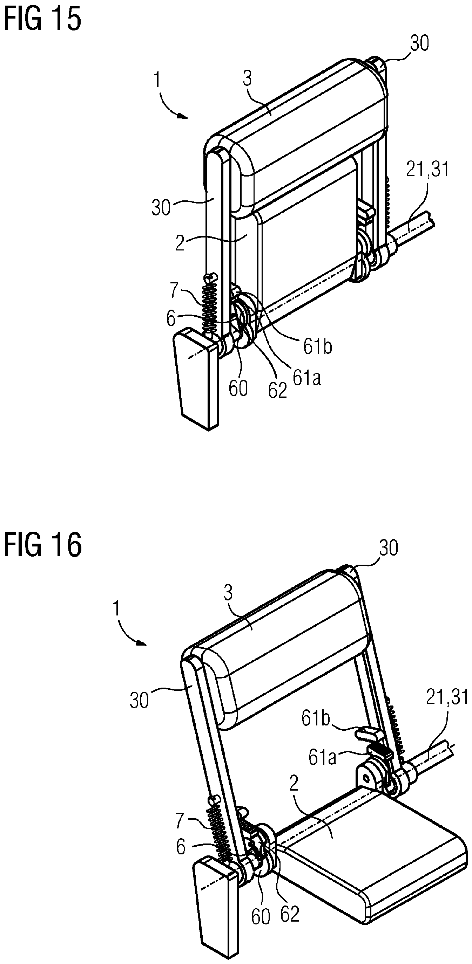

In den Figuren 15 und 16 ist das Ausführungsbeispiel des Klappsitzes 1 aus den Figuren 12 bis 14 in einer perspektivischen Ansicht dargestellt. In der Figur 15 sind das Sitzelement 2 und die Rückenlehne 3 in ihrer jeweiligen dritten Position. Ein Schwenken der Rückenlehne 3 ist hier noch nicht freigegeben. In der Figur 16 ist das Sitzelement 2 in seine erste Position ausgeklappt. Dadurch wurde auch ein Schwenken der Rückenlehne 3 freigegeben. In der Figur 16 ist die Rückenlehne 3 in die korrespondierende erste Position geschwenkt. In dem gezeigten Ausführungsbeispiel fallen die Drehachse 21 des Sitzelements 2 und die Drehachse 31 der Rückenlehne 3 zusammen.

In den Figuren 15 und 16 ist außerdem zu erkennen, dass der Klappsitz 1 eine Rückstellfeder 7 umfasst. Die Rückstellfeder 7 ist mit einem Ende an dem Arm 30 der Rückenlehne 3 befestigt. Die Rückstellfeder 7 sorgt dafür, dass auf den Arm 30 eine Hebelkraft wirkt, die die Rückenlehne 3 zurück in die dritte Position schwenken will. Nur wenn sich beispielsweise eine auf dem Sitzelement 2 sitzende Person an die Rückenlehne 3 anlehnt, wird die Rückenlehne 3 in die erste Position geschwenkt. Hört die Person auf, sich an die Rückenlehne 3 anzulehnen, sorgt die Rückstellfeder 7 dafür, dass die Rückenlehne 3 wieder in die dritte Position übergeht. Eine Rückstellung in die dritte Position ließe sich auch über zwei gegenläufig ausgerichtete und an den Drehpunkten der beiden Arme 30 angeordnete Spiralfedern erreichen.

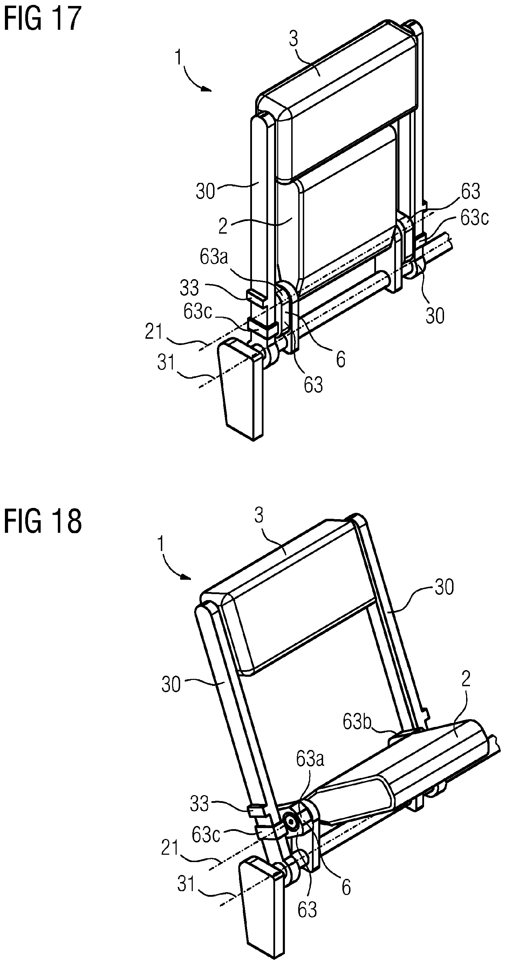

In den Figuren 17 bis 19 ist ein weiteres Ausführungsbeispiel des Klappsitzes 1 in perspektivischer Ansicht gezeigt. Wiederum sind die Rückenlehne 3 und das Sitzelement 2 bezüglich ihrer jeweiligen Schwenkbewegung über ein Getriebe 6 miteinander gekoppelt. Vorliegend ist das Getriebe 6, anders als im vorhergehenden Ausführungsbeispiel, aber nicht so ausgebildet, dass durch das Schwenken des Sitzelements 2 ein unabhängiges Schwenken der Rückenlehne 3 freigegeben wird. Vielmehr ist das Getriebe 6 hier so ausgebildet, dass durch ein Schwenken des Sitzelements 2 die Rückenlehne 3 automatisch mitgeschwenkt wird und umgekehrt. Dazu umfasst das Getriebe 6 vorliegend eine Kurbel 63, die starr, das heißt ohne bewegliches Gelenk, mit dem Sitzelement 2 verbunden ist. Dies hat zur Folge, dass beim Schwenken des Sitzelements 2 auch die Kurbel 63 gedreht wird.

Die Kurbel 63 ist mit einem ersten Ende 63a an dem Sitzelement 2 befestigt. Mit einem zweiten Ende 63b ist die Kurbel 63 über ein Führungselement 63c an dem Arm 30 der Rückenlehne 3 befestigt. Der Arm 30 erstreckt sich senkrecht zur Drehachse 31 der Rückenlehne 3 und ist als Teil der Rückenlehne 3 drehbar um die Drehachse 31 gelagert. Das Führungselement 63c ist verschiebbar entlang einer Längsachse des Arms 30 an dem Arm 30 befestigt. Vorliegend ist das Führungselement 63c als eine Klammer ausgebildet, die den Arm 30 umgreift und so verschiebbar an dem Arm 30 gelagert ist. Das Führungselement 63c ist über ein Drehgelenk mit dem zweiten Ende 63b der Kurbel 63 verbunden.

Ferner ist zu erkennen, dass an dem Arm 30 ein Anschlag 33 in Form eines Vorsprungs ausgebildet ist.

In der Figur 17 befinden sich die Rückenlehne 3 und das Sitzelement 2 jeweils in ihrer dritten Position, in der der Klappsitz 1 zum Anlehnen einer stehenden Person dient. Das Führungselement 63c ist entlang der Längsachse 30 beabstandet zum Anschlag 33 und beabstandet zur Drehachse 31 angeordnet.

In der Figur 18 ist das Sitzelement 2 aus der dritten Position heraus um seine Drehachse 21 geschwenkt. Dabei hat sich die Kurbel 63 mitgedreht. Das zweite Ende 63b der Kurbel 63 wurde dadurch zu einer Kreisbewegung gezwungen. Durch diese Kreisbewegung musste sich das Führungselement 63c entlang der Längsachse des Arms 30 in Richtung des Anschlags 33 verschieben. Dazu musste das Führungselement 63c eine Hebelkraft auf den Arm 30 ausüben, die das Schwenken des Arms 30 beziehungsweise der Rückenlehne 3 in entgegengesetzter Richtung zur Schwenkrichtung des Sitzelements 2 erzwungen hat. Die Rückenlehne 3 wurde dabei um deren Drehachse 31 geschwenkt, die vorliegend versetzt zu der Drehachse 21 des Sitzelements 2 ist. Das Übersetzungsverhältnis ist so gewählt, dass der Schwenkwinkel der Rückenlehne 3 kleiner ist als der Schwenkwinkel des Sitzelements 2. Das Getriebe funktioniert natürlich entsprechend auch umgekehrt, wenn die Rückenlehne 3 geschwenkt wird.

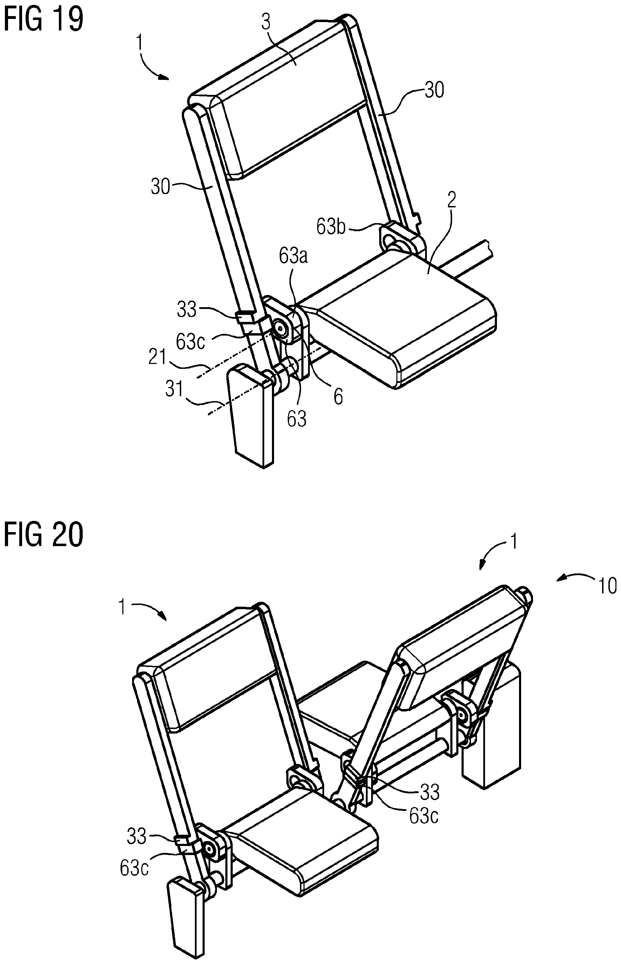

In der Figur 19 ist die Schwenkbewegung aus der Figur 18 weitergeführt, bis das Sitzelement 2 in seiner ausgeklappten, ersten Position angekommen ist. Gleichzeitig wurde dadurch die Rückenlehne 3 in ihre korrespondierende erste Position gezwungen. Das Führungselement 63c hat sich dabei bis zum Anschlag 33 entlang der Längsachse des Arms 30 verschoben. Durch den Anschlag 33 ist eine weitere Bewegung des Führungselements 63c entlang der Längsachse des Arms 30 blockiert, wodurch die erste Position des Sitzelements 2 und die erste Position der Rückenlehne 3 vorgegeben sind. Darüber hinaus ist ein Schwenken nicht möglich. Eine Schwenkbewegung des Sitzelements 2 beziehungsweise der Rückenlehne 3 ist nun nur noch zurück in Richtung der jeweiligen dritten Position und von dort aus gegebenenfalls in Richtung der zweiten Position möglich.

In der Figur 20 ist ein Ausführungsbeispiel des Klappsitzsystems 10 mit zwei Klappsitzen 1, wie in den Figuren 17 bis 19 beschrieben gezeigt. In der Figur 20 ist zu erkennen, dass mit dem wie zuvor beschriebenen Getriebe 6 ein gekoppeltes Schwenken des Sitzelements 2 und der Rückenlehne 3 sowohl in die jeweilige erste Position als auch in die jeweilige zweite Position möglich ist. Sowohl in der ersten Position als auch in der zweiten Position liegt das Führungselement 63c am Anschlag 33 an, sodass eine Schwenkbewegung über die erste und zweite Position hinaus nicht möglich ist. Das Getriebe funktioniert natürlich entsprechend auch umgekehrt, wenn die Rückenlehne 3 geschwenkt wird.

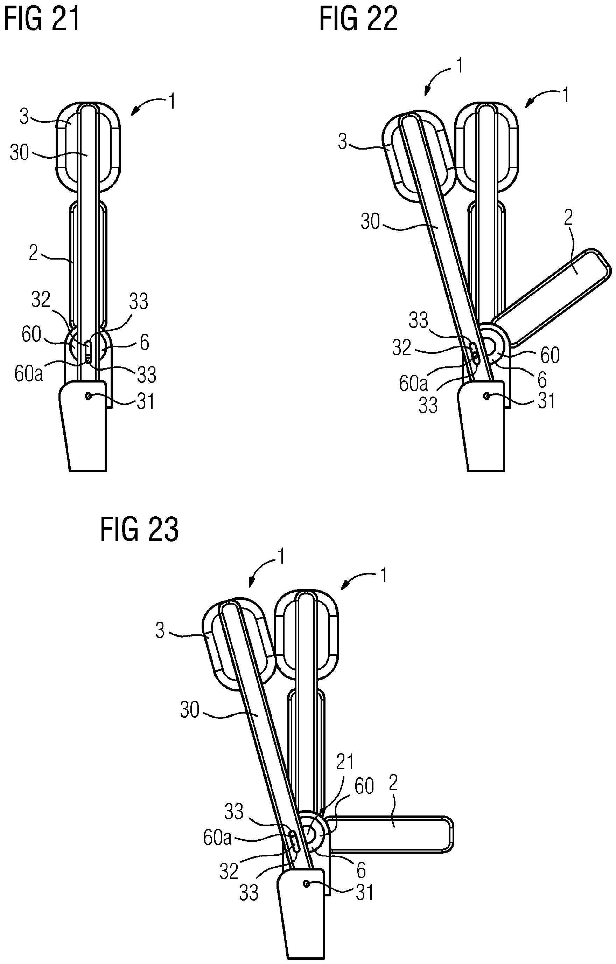

In den Figuren 21 bis 23 ist ein weiteres Ausführungsbeispiel des Klappsitzes 1 gezeigt. Wie im vorherigen Ausführungsbeispiel der Figuren 17 bis 19 sind das Sitzelement 2 und die Rückenlehne 3 wieder über ein Getriebe 6 gekoppelt, sodass eine Schwenkbewegung des Sitzelements 2 automatisch zu einer Schwenkbewegung der Rückenlehne 3 führt und umgekehrt. Wieder sind die Drehachsen 21, 31 zueinander versetzt.

Vorliegend umfasst das Getriebe 6 ein Kurbelrad 60, das starr mit dem Sitzelement 2 verbunden ist. Das Kurbelrad 60 ist über ein Führungselement 60a in Form eines Stiftes mit dem Arm 30 verbunden. Der Stift 60a ist dabei starr an dem Kurbelrad 60 befestigt. In den Arm 30 der Rückenlehne 3 ist ein länglicher Schlitz 32 eingebracht, in den der Stift 60a eingreift und entlang dessen der Stift 60a bei einer Rotation des Kurbelrades 60 entlang gleiten kann. Einer Haupterstreckungsrichtung des Schlitzes 32 verläuft parallel zur Längsachse des Arms 30.

In der Figur 21 befinden sich sowohl das Sitzelement 2 als auch die Rückenlehne 3 in ihrer jeweiligen dritten Position.

In der Figur 22 ist das Sitzelement 2 um einen Winkel nach rechts geschwenkt. Das Kurbelrad 60 hat sich dabei entsprechend mitgedreht. Dadurch wurde der Stift 60a auf eine Kreisbahn gezwungen, dabei entlang des Schlitzes 32 verschoben und gleichzeitig wurde eine Hebelkraft auf den Arm 30 ausgeübt, die den Arm 30 und die Rückenlehne 3 in eine Schwenkbewegung nach links gezwungen hat.

In der Figur 23 ist die Schwenkbewegung des Sitzelements 2 fortgeführt, bis zu dem Punkt bei dem der Stift 60a an einem Ende des Schlitzes 32, welcher einen Anschlag 33 bildet, anschlägt. Eine darüber hinausgehende Schwenkbewegung des Sitzelements 2 ist nicht möglich. Das Sitzelement 2 ist in seiner ersten Position. Die Rückenlehne 3 wurde in ihre korrespondierende erste Position gezwungen. Das Getriebe funktioniert natürlich entsprechend, wenn die Rückenlehne 3 geschwenkt wird.

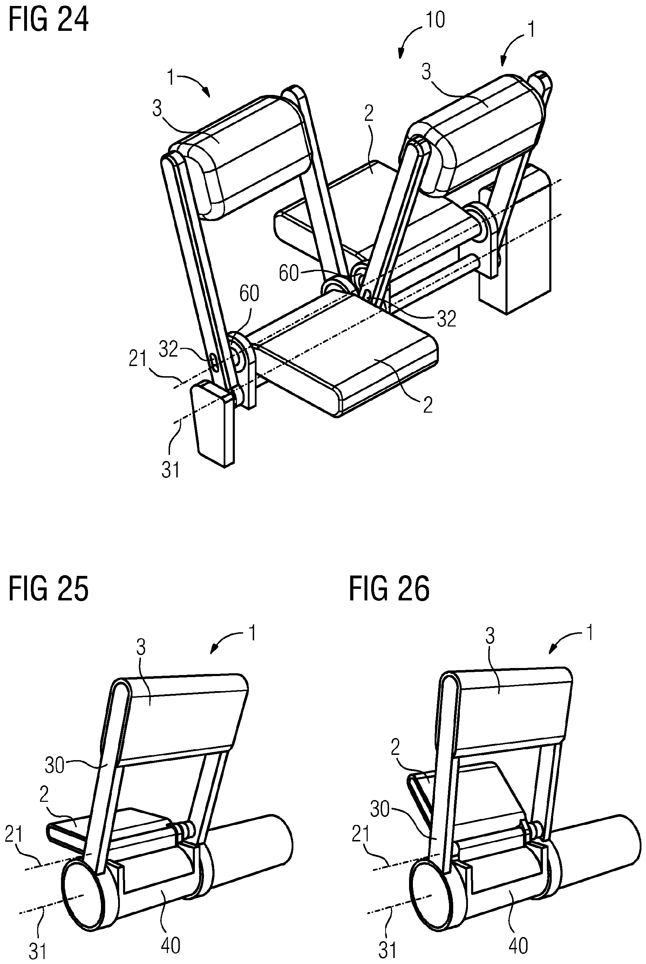

In der Figur 24 ist ein Klappsitzsystem 10 mit zwei Klappsitzen 1 wie im Zusammenhang mit den Figuren 21 bis 23 beschrieben gezeigt. Es ist zu erkennen, dass mit dem wie soeben beschriebenen Getriebe 6 ein Ausklappen der Sitzelemente 2 sowohl in die erste als auch in die zweite Position möglich ist und dabei jeweils die Rückenlehnen 3 automatisch mit geschwenkt werden. In beide Schwenkrichtungen bildet das obere Ende des Schlitzes 32 einen Anschlag 33 für den Stift 60a.

In den Figuren 25 bis 33 ist ein weiteres Ausführungsbeispiel eines Klappsitzes 1 in verschiedenen Positionen und in verschiedenen Ansichten gezeigt. Der Klappsitz 1 umfasst ein Cantileverrohr 40, das an einer Wand befestigbar ist, sodass der Klappsitz 1 frei über dem Boden hängt. Der Klappsitz 1 erfährt also in diesem Fall keine zusätzliche bodenseitige Unterstützung, sondern ist allein durch die seitliche Befestigung über das Cantileverrohr 40 stabil montiert und kann eine oder mehrere sitzende Personen tragen.

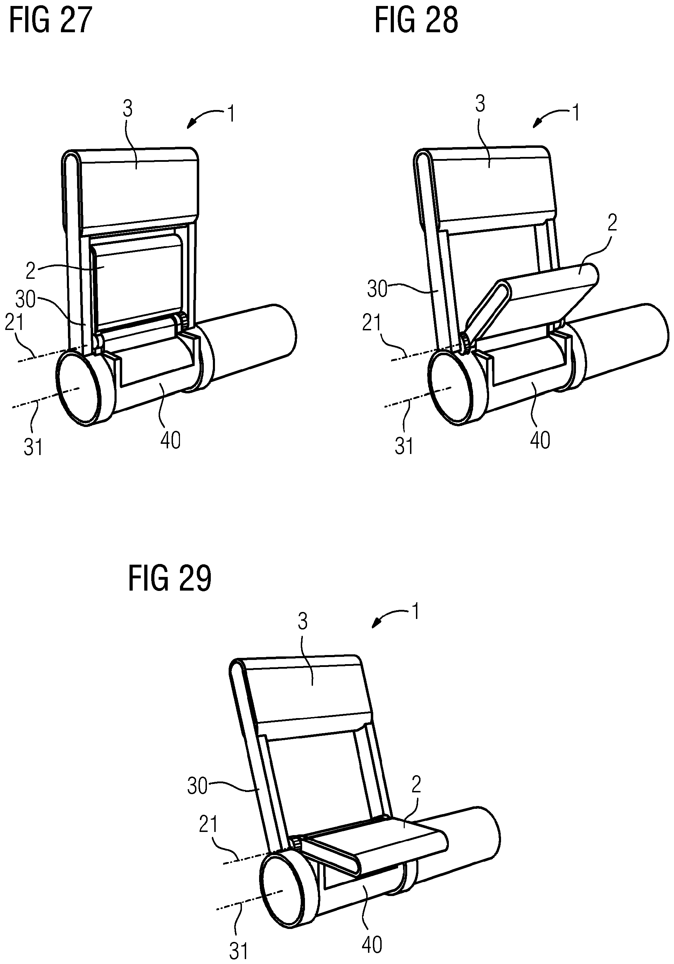

In den Figuren 25 bis 29 ist gezeigt, wie das Sitzelement 2 ausgehend von der ausgeklappten, zweiten Position zunächst in die dritte Position überführt wird (siehe Figur 27), in der der Klappsitz 1 insbesondere zum Anlehnen einer stehenden Person eingerichtet ist. Ausgehend von der dritten Position der Figur 27 wird dann das Sitzelement 2 in die erste Position ausgeklappt (siehe Figur 29). Beim Schwenken des Sitzelements 2 wird automatisch die Rückenlehne 3 mitgeschwenkt. Dazu ist wieder ein Getriebe verwendet.

Wie außerdem in den Figuren 25 bis 29 zu erkennen ist, sind die Drehachsen 21, 31 des Sitzelements 2 und der Rückenlehne 3 voneinander beabstandet. Beim Schwenken des Sitzelements 2 von der zweiten Position in die erste Position bleibt der Abstand und die relative Position der Drehachse 31 der Rückenlehne 3 zu der Drehachse 21 des Sitzelements 2 konstant. Auch bezüglich des Cantileverrohrs 40 ändern sich die Positionen der beiden Drehachsen 21, 31 während des Schwenkens nicht.

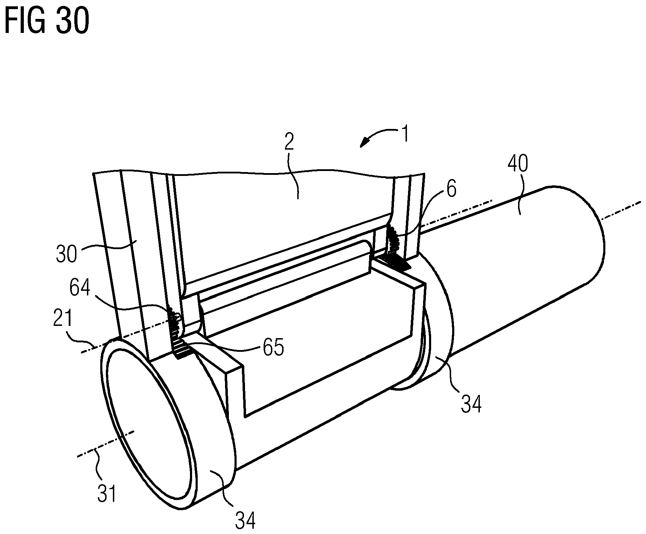

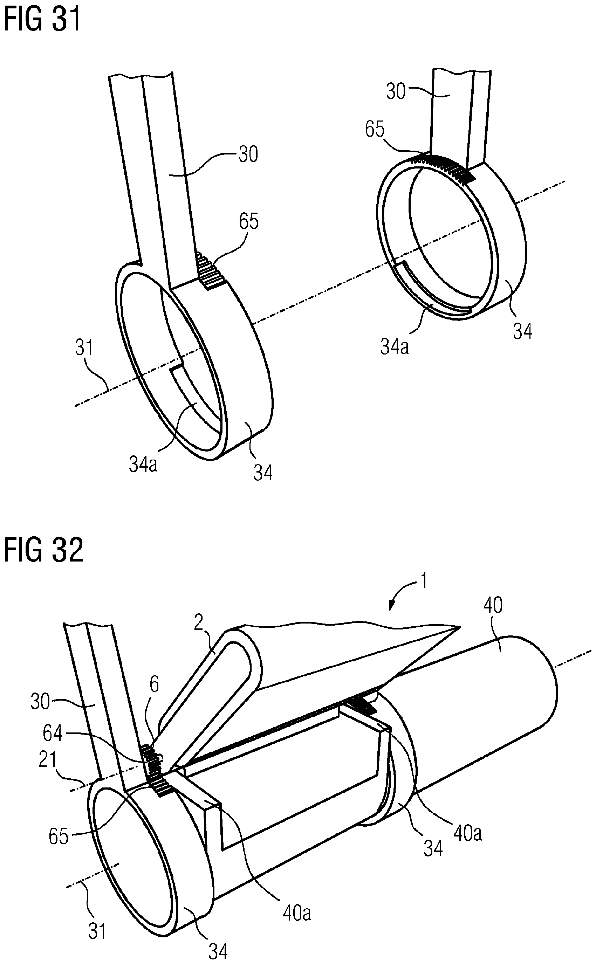

In den Figuren 30 bis 33 sind Detailansichten zu dem Klappsitz 1 der Figuren 25 bis 29 dargestellt, die das verwendete Getriebe 6 verdeutlichen sollen. Das Getriebe 6 weist ein erstes Zahnrad 64 und ein zweites Zahnrad 65 auf. Das erste Zahnrad 64 ist starr mit dem Sitzelement 2 verbunden und über ein längliches Achslager auf dem Cantileverrohr gelagert, sodass beim Schwenken des Sitzelements 2 um dessen Drehachse 21 das erste Zahnrad 64 mitgedreht wird. Das zweite Zahnrad 65 ist starr mit der Rückenlehne 3 beziehungsweise mit einem Arm 30 der Rückenlehne 3 verbunden (siehe auch Figur 31). Beim Schwenken der Rückenlehne 3 wird das zweite Zahnrad 65 also mitgedreht (siehe auch Figur 31).

Wie in der Figur 31 zu erkennen ist, ist das zweite Zahnrad 65 durch einen Ring 34 gebildet, der rings um das Cantileverrohr 40 verläuft. Die Zähne des zweiten Zahnrads 65 befinden sich dabei auf einer Außenseite des Rings 34. Der Ring 34 ist bezüglich des Cantileverrohrs 40 drehbar gelagert. Dadurch ist die Rückenlehne 3 schwenkbar ausgeführt, wobei die Drehachse 31 der Rückenlehne 3 konzentrisch durch den Ring 34 beziehungsweise durch das Cantileverrohr 40 verläuft. Der Ring 34 umfasst eine Nut 34a, deren Enden Anschläge bilden. Ein am Cantilverohr 40 befestigter Bolzen (nicht gezeigt) greift in die Nut 34a ein. Durch das Anschlagen des Bolzens an den Enden der Nut 34a sind die maximalen Schwenkwinkel der Rückenlehne 3 vorgegeben.

Die Zähne des zweiten Zahnrads 65 umgeben den Ring 34 nicht vollständig, sondern nutzen lediglich ein Kreissegment des Rings 34 mit einem Segmentwinkel von kleiner 90°.

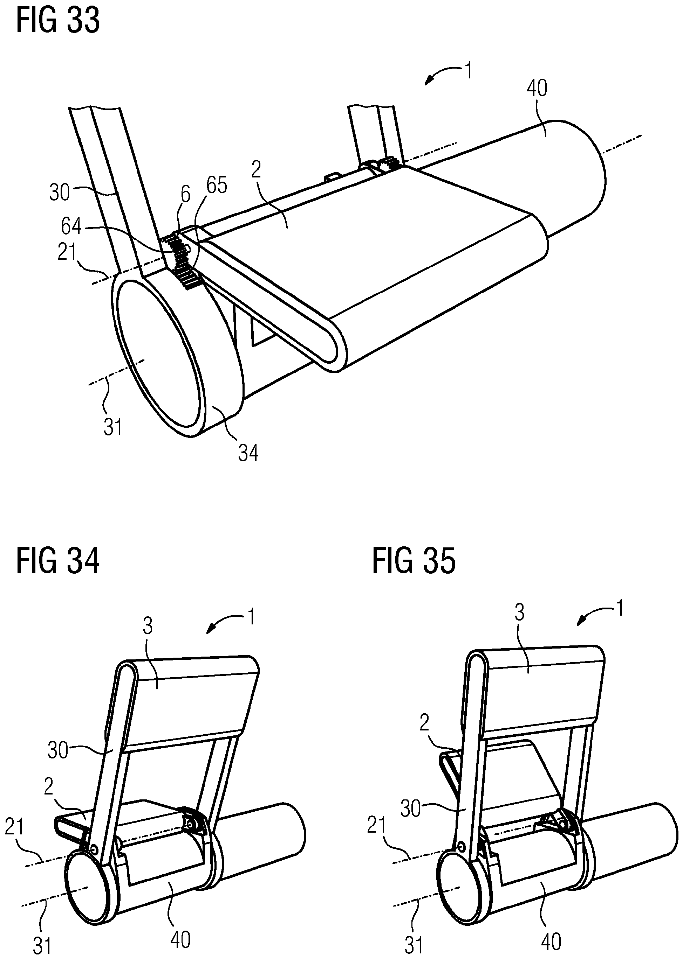

In der Figur 32 ist gezeigt, wie das Sitzelement 2 mit der Rückenlehne 3 gekoppelt ist, indem das erste Zahnrad 64 auf das zweite Zahnrad 65 aufgelegt ist, sodass die Zähne der beiden Zahnräder 64, 65 ineinandergreifen. Eine mechanische Stabilität ist dadurch erreicht, dass das Sitzelement 2 in einem Achslager des Cantilverrohrs 40 schwenkbar gelagert ist. Beim Schwenken des Sitzelements 2 wird das erste Zahnrad 64 in Rotation versetzt, was zu einer Rotation des zweiten Zahnrads 65 führt. Dies wiederum resultiert in einem Schwenken der Rückenlehne 3. Das Übersetzungsverhältnis der beiden Zahnräder 64, 65 ist bevorzugt so gewählt, dass die Rückenlehne 3 weniger stark geschwenkt wird als das Sitzelement 2. Das Cantilverrohr 40 umfasst zwei Anschläge 40a, auf denen das Sitzelement 2 in der ersten und zweiten Position aufliegt (siehe Figur 33).

Das Getriebe funktioniert natürlich entsprechend auch umgekehrt, wenn die Rückenlehne 3 geschwenkt wird.

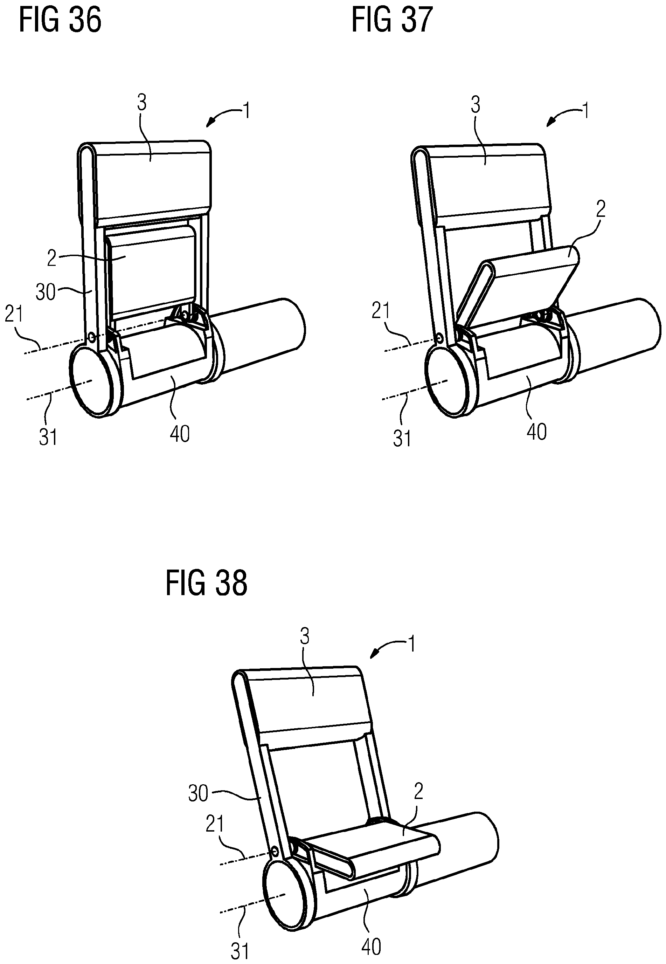

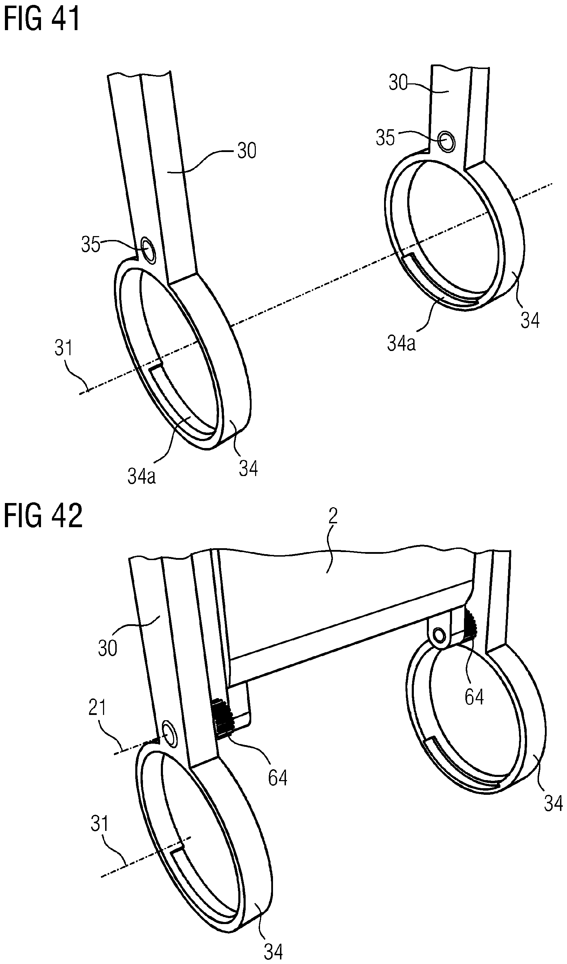

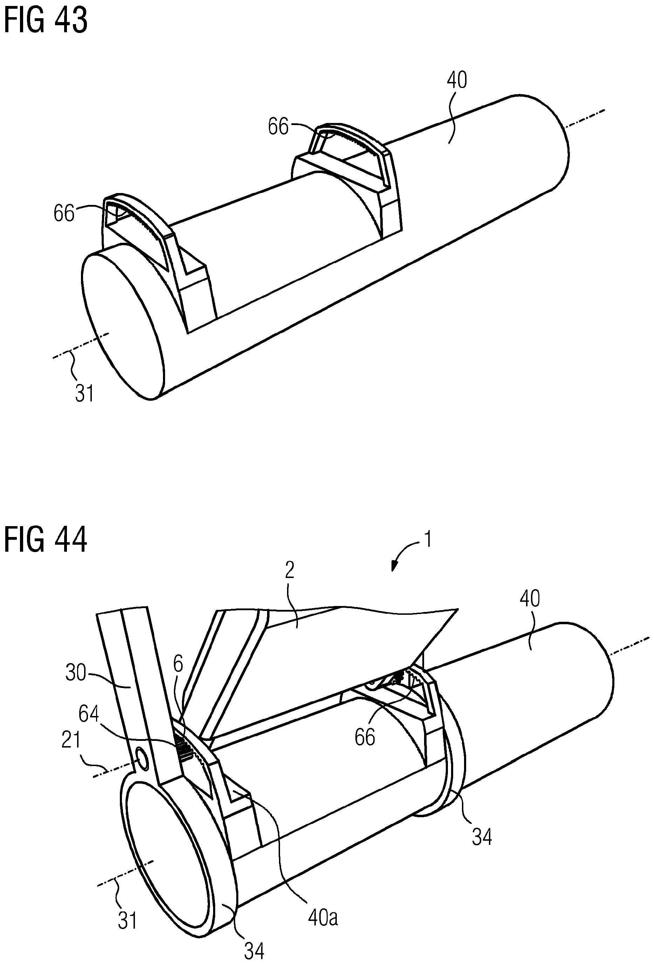

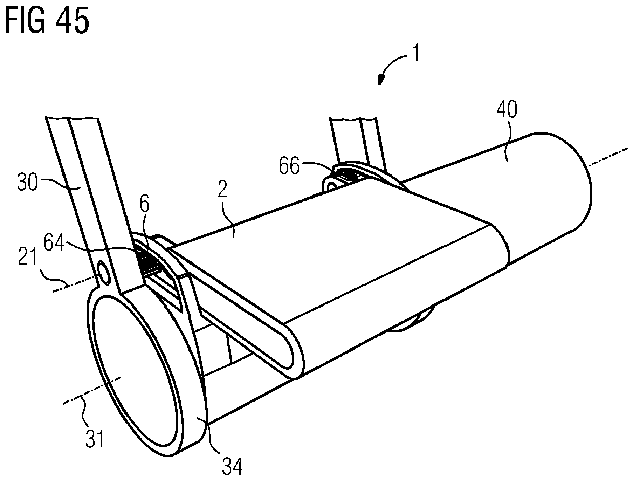

In den Figuren 34 bis 45 ist noch ein weiteres Ausführungsbeispiel des Klappsitzes 1 gezeigt. Dabei ist in den Figuren 34 bis 38 wieder gezeigt, wie ausgehend von der zweiten Position des Sitzelements 2 (siehe Figur 34) das Sitzelement 2 zunächst in die dritte Position geschwenkt wird (siehe Figur 36) und dann ausgehend von der dritten Position in die erste Position (siehe Figur 38) geschwenkt wird. Gleichzeitig und automatisch wird die Rückenlehne 3 von der zweiten Position über die dritte Position in die erste Position geschwenkt.

Anders als in den vorhergehenden Ausführungsbeispielen ändert sich hier aber die Position der Drehachse 21 des Sitzelements 2, wohingegen die Position der Drehachse 31 der Rückenlehne 3 fest bleibt. Der Abstand zwischen den Drehachsen 21, 31 bleibt gleich.

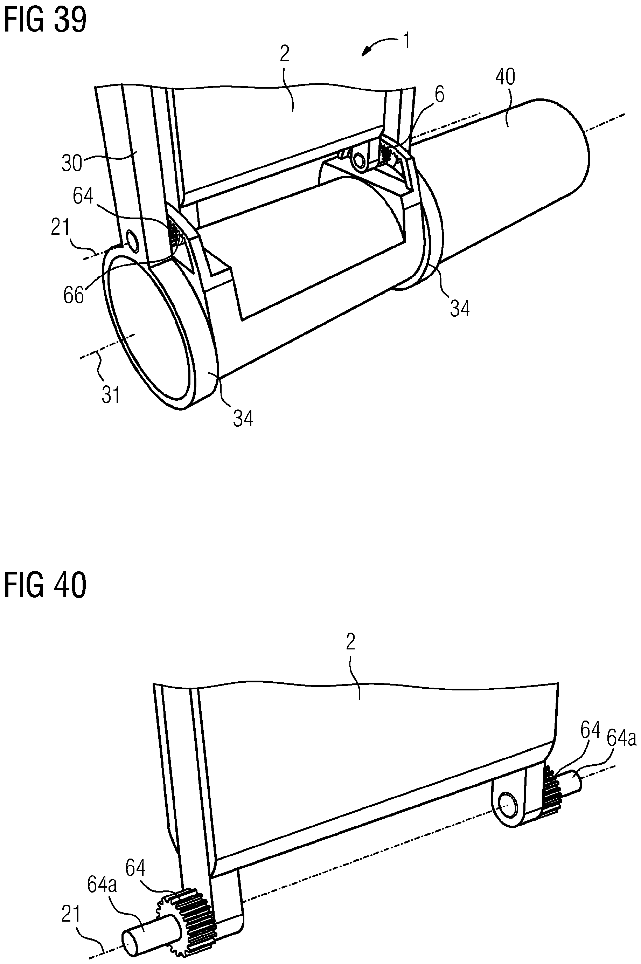

In den Figuren 39 bis 45 ist das hierfür verwendete Getriebe 6 anhand von Detailansichten näher erläutert. Das Getriebe 6 umfasst ein erstes Zahnrad 64, dass starr mit dem Sitzelement 2 verbunden ist und so beim Schwenken des Sitzelements 2 rotiert wird (siehe Figur 40). Das Sitzelement 2 ist in dem der Rückenlehne 3 zugeordneten Arm 30 über ein Drehgelenk drehbar gelagert. Dazu ist ein Bolzen 64a des Sitzelements 2 in eine Ausnehmung des Arms 30 eingeführt (siehe Figuren 39, 41, 42). Der Bolzen 64a greift in einem Abstand zur Drehachse 31 der Rückenlehne 3 in eine Öffnung 35 in dem Arm 30 ein, sodass über den Bolzen 64a eine Hebelkraft auf den Arm 30 übertragen werden kann. Der Bolzen 64a bildet gleichzeitig ein Lager für die Drehung des Sitzelements 2. Die Drehachse 21 verläuft also durch den Bolzen 64a.

Der Arm 30 ist wieder über Ringe 34 rotierbar an dem Cantileverrohr 40 befestigt(siehe Figur 39). An dem Cantileverrohr 40 ist eine kreisbogenförmige Zahnstange 66 angeordnet. Die Zahnstange 66 ist auf dem Cantileverrohr 40 fest positioniert. Die Zahnstange 66 ist in diesem Fall durch ein teilweise innenverzahntes Zahnrad realisiert. Durch Schwenken des Sitzelements 2 wird das erste Zahnrad 64 rotiert und durch das Eingreifen in die Zahnstangen 66 in eine Bewegung senkrecht zur Drehachse 21 und entlang der Zahnstange 66 gezwungen, wodurch sich die Drehachse 21 des Sitzelements 2 verschiebt. Dabei kann nur das erste Zahnrad 64 nicht aber die Zahnstange 66 eine Bewegung ausführen, denn die Zahnstange 66 ist fest positioniert und nicht bewegbar. Durch die Bewegung entlang der Zahnstange wird über den Bolzen 64a eine Hebelkraft auf den Arm 30 übertragen, was zu einem Schwenken der Rückenlehne 3 um dessen Drehachse 31 führt (siehe Figuren 39, 44 und 45).

Entsprechend funktioniert das Getriebe auch, wenn die Rückenlehne 3 geschwenkt wird. Dies könnte sogar der bevorzugte Anwendungsfall sein. In diesem Fall wird der Bolzen 64a inklusive des gekoppelten Zahnrades 64 verschoben, was zu einer Bewegung des ersten Zahnrads 64 entlang der Zahnstange 66 führt. Durch das Eingreifen in die Zahnstange 66 wird das erste Zahnrad 64 zusammen mit dem Bolzen 64a rotiert, was zu einem Schwenken des Sitzelements 2 führt.

Die maximalen Schwenkwinkel der Rückenlehne 3 und des Sitzelements 2 sind wieder durch Anschläge begrenzt, wie sie im Zusammenhang mit dem vorhergehenden Ausführungsbeispiel beschrieben wurden. Das Getriebe funktioniert natürlich entsprechend auch umgekehrt, wenn die Rückenlehne 3 geschwenkt wird.

### Bezugszeichenliste

- 1: Klappsitz
- 2: Sitzelement
- 3: Rückenlehne
- 4: Fußelement
- 6: Getriebe
- 10: Klappsitzsystem
- 21: Drehachse
- 30: Arm
- 31: Drehachse
- 32: Schlitz
- 33: Anschlag
- 34: Ring
- 34a: Nut
- 35: Öffnung
- 40: Cantileverrohr
- 40a: Anschlag
- 41: Befestigungselement
- 60: Kurbelrad
- 60a: Stift
- 61: Sperrvorrichtung
- 61a: erste Zahnstange
- 61b: zweite Zahnstange
- 62: geschlitztes Rad
- 62a: Schlitz
- 63: Kurbel
- 63a: erstes Ende der Kurbel
- 63b: zweites Ende der Kurbel
- 63c: Klammer
- 64: erstes Zahnrad
- 64a: Bolzen
- 65: zweites Zahnrad
- 66: Zahnstange
- 100: Schienenfahrzeug

## Patentansprüche

1. Klappsitz (1) für ein Schienenfahrzeug (100), umfassend
- eine Rückenlehne (3),
- ein Sitzelement (2), wobei
- das Sitzelement (2) zwischen zwei Positionen reversibel hin und her schwenkbar eingerichtet ist,
- in einer ersten und zweiten Position des Sitzelements (2) das Sitzelement (2) jeweils ausgeklappt ist, sodass der Klappsitz (1) zum Sitzen einer Person auf dem Sitzelement (2) eingerichtet ist,
**dadurch gekennzeichnet, dass**
- das Sitzelement (2) zwischen drei Positionen reversibel hin und her schwenkbar eingerichtet ist,- in einer dritten Position des Sitzelements (2) das Sitzelement (2) eingeklappt ist und zusammen mit der Rückenlehne (3) eine Anlehnfläche zum Anlehnen einer stehenden Person bildet,
- das Sitzelement (2) in seiner ersten und zweiten Position bezüglich der dritten Position in einander entgegengesetzte Richtungen geschwenkt ist.

2. Klappsitz (1) nach Anspruch 1, **dadurch gekennzeichnet, dass**
- die Rückenlehne (3) zwischen drei Positionen reversibel hin und her schwenkbar ist,
- die drei Positionen der Rückenlehne (3) mit den drei Positionen des Sitzelements (2) korrespondieren.

3. Klappsitz (1) nach Anspruch 2, **dadurch gekennzeichnet, dass** die Rückenlehne (3) und das Sitzelement (2) unabhängig voneinander zwischen den jeweiligen drei Positionen hin und her schwenkbar sind.

4. Klappsitz (1) nach Anspruch 2, **dadurch gekennzeichnet, dass**
die Rückenlehne (3) und das Sitzelement (2) hinsichtlich der jeweiligen Schwenkbewegungen über ein Getriebe (6) gekoppelt sind, sodass durch Schwenken der Rückenlehne (3) oder des Sitzelements (2) heraus aus einer der drei jeweiligen Positionen das Schwenken des Sitzelements (2) oder der Rückenlehne (3) erzwungen oder freigegeben wird.

5. Klappsitz (1) nach Anspruch 4, **dadurch gekennzeichnet, dass**
- das Getriebe (6) ein Kurbelelement (60) mit einem Stift (60a), eine Sperrvorrichtung (61) und ein geschlitztes Rad (62) umfasst,
- das Kurbelelement (60) starr mit dem Sitzelement (2) verbunden ist, sodass das Kurbelelement (60) beim Schwenken des Sitzelements (2) gedreht wird und dabei der Stift (60a) entlang einer Kreislinie bewegt wird,
- in der dritten Position des Sitzelements (2) die Sperrvorrichtung (61) in einem Sperrzustand ist, wodurch das Schwenken der Rückenlehne (3) blockiert ist,
- in der dritten Position des Sitzelements (2) der Stift (60a) in den Schlitz (62a) des geschlitzten Rads (62) eingreift,
- das Getriebe (6) so eingerichtet ist, dass beim Schwenken des Sitzelements (2) aus der dritten Position heraus zumindest bis zu einem vorgegebenen Schwenkwinkel der Stift (60a) weiter in den Schlitz (62a) eingreift und eine Kraft auf das gelschlitze Rad (62) ausübt, wodurch das geschlitzte Rad (62) gedreht wird,
- die Sperrvorrichtung (61) mit dem geschlitzten Rad (62) derart gekoppelt ist, dass durch die beim Überschreiten des vorgegebenen Schwenkwinkels korrespondierende Drehung des geschlitzten Rads (62) der Sperrzustand gelöst wird und das Schwenken der Rückenlehne (3) freigeben wird.

6. Klappsitz (1) nach Anspruch 4, **dadurch gekennzeichnet, dass**
- das Getriebe (6) ein Kurbelelement (60, 63) mit einem an dem Kurbelelement (60, 63) befestigten Führungselement (60a, 63c) umfasst,
- das Kurbelelement (60, 63) starr mit dem Sitzelement (2) verbunden ist, sodass das Kurbelelement (60, 63) beim Schwenken des Sitzelements (2) gedreht wird und dabei das Führungselement (60a, 63c) entlang einer Kreislinie bewegt wird,
- die Rückenlehne (3) einen länglichen Arm (30) umfasst, der sich quer zur Drehachse (31) der Rückenlehne (3) erstreckt,
- das Führungselement (60a, 63c) mit dem Arm (30) verbunden ist und entlang einer Längsachse des Arms (30) verschiebbar an dem Arm (30) befestigt ist,
- das Getriebe (60) so eingerichtet ist, dass beim Schwenken des Sitzelements (2) das Führungselement (60a, 63c) entlang der Längsachse des Arms (30) verschoben wird und gleichzeitig eine Hebelkraft auf den Arm (30) ausübt, die ein Schwenken der Rückenlehne (3) um dessen Drehachse (31) erzwingt.

7. Klappsitz nach Anspruch 6, **dadurch gekennzeichnet, dass** das Führungselement einer Klammer (63c) ist, die den Arm (30) umgreift, und die über ein Drehgelenk an dem Kurbelelement (63) befestigt ist.

8. Klappsitz (1) nach Anspruch 6, **dadurch gekennzeichnet, dass**
- das Führungselement ein Stift (60a) ist,
- der Arm (30) einen länglichen Schlitz (32) aufweist, der sich entlang der Längsachse des Arms (30) erstreckt,
- der Stift (60a) in den Schlitz (32) eingreift und entlang des Schlitzes (32) verschiebbar gelagert ist.

9. Klappsitz (1) nach einem der Ansprüche 6 bis 8, **dadurch gekennzeichnet, dass**
- der Arm (30) zumindest einen Anschlag (33) aufweist, sodass das Führungselement (60a, 63c) nur bis zu dem Anschlag (33) entlang der Längsachse des Arms (30) versschiebbar ist,
- sowohl in der ersten als auch in der zweiten Position des Sitzelements (2) das Führungselement (60a, 63c) an einem Anschlag (33) anschlägt.

10. Klappsitz nach Anspruch 4, **dadurch gekennzeichnet, dass**
- das Getriebe (6) ein erstes Zahnrad (64) und ein zweites Zahnrad (65) umfasst,
- das erste Zahnrad (64) starr mit dem Sitzelement (64) verbunden ist, sodass das erste Zahnrad (64) beim Schwenken des Sitzelements (2) gedreht wird,
- das zweite Zahnrad (65) starr mit der Rückenlehne (3) verbunden, sodass das zweite Zahnrad (65) beim Schwenken der Rückenlehne (3) gedreht wird,
- das erste Zahnrad (64) und das zweite Zahnrad (65) ineinandergreifen, sodass beim Schwenken des Sitzelements (2) ein Schwenken der Rückenlehne (3) erzwungen wird.

11. Klappsitz nach Anspruch 4, **dadurch gekennzeichnet, dass**
- das Getriebe (6) ein erstes Zahnrad (64) und eine Zahnstange (66) umfasst,
- das erste Zahnrad (64) starr mit dem Sitzelement (2) verbunden ist, sodass das erste Zahnrad (64) beim Schwenken des Sitzelements (2) gedreht wird,
- die Rückenlehne (3) einen Arm (30) umfasst, der sich quer zur Drehachse (31) der Rückenlehne (3) erstreckt,
- das erste Zahnrad (64) über ein Drehgelenk beabstandet zur Drehachse (31) der Rückenlehne (3) mit dem Arm (30) verbunden ist,
- das erste Zahnrad (64) in die Zahnstange (66) eingreift,
- das Getriebe (6) so eingerichtet ist, dass beim Schwenken des Sitzelements (2) das erste Zahnrad (64) in eine Translationsbewegung entlang der Zahnstange (65) gezwungen wird und dabei eine Hebelkraft auf den Arm (30) ausübt, die ein Schwenken der Rückenlehne (3) um dessen Drehachse (31) erzwingt.

12. Klappsitz (1) nach einem der Ansprüche 2 bis 11, **dadurch gekennzeichnet, dass**
- das Sitzelement (2) aus seiner dritten Position heraus um jeweils zumindest 80° in einander entgegengesetzten Richtungen schwenkbar ist,
- die Rückenlehne (3) aus ihrer dritten Position heraus jeweils um zumindest 10° und höchstens 45° in einander entgegengesetzte Richtungen schwenkbar ist.

13. Klappsitz (1) nach einem der Ansprüche 2 bis 12, **gekennzeichnet durch**
- einen Cantilever (40) zur seitlichen Befestigung des Klappsitzes (1) an einer Seitenwand eines Schienenfahrzeuges, wobei
- eine Drehachse (31) der Rückenlehne (3) durch den Cantilever (40) verläuft.

14. Klappsitzsystem (10), umfassend zumindest zwei Klappsitze (1) jeweils gemäß einem der vorhergehenden Ansprüche, wobei die Klappsitze (1) miteinander verbunden sind.

15. Schienenfahrzeug (100), umfassend einen Klappsitz (1) nach einem der Ansprüche 1 bis 13.

## Claims

1. Folding seat (1) for a rail vehicle (100), comprising
- a backrest (3);
- a seat element (2); wherein
- the seat element (2) is specified to be reversibly pivotable in a reciprocating manner between two positions;
- in a first and a second position of the seat element (2), the seat element (2) is in each case folded out such that the folding seat (1) is specified for seating one person on the seat element (2),
**characterized in that**
- the seat element (2) is specified to be reversibly pivotable in a reciprocating manner between three positions,
- in a third position of the seat element (2), the seat element (2) is folded in and conjointly with the backrest (3) forms a resting face for a standing person to rest on;
- the seat element (2) in the first and the second position thereof in terms of the third position is pivoted in mutually opposite directions.

2. Folding seat (1) according to Claim 1, **characterized in that**
- the backrest (3) is reversibly pivotable in a reciprocating manner between three positions;
- the three positions of the backrest (3) correspond to the three positions of the seat element (2).

3. Folding seat (1) according to Claim 2, **characterized in that** the backrest (3) and the seat element (2) are pivotable in a reciprocating manner between the respective three positions independently of one another.

4. Folding seat (1) according to Claim 2, **characterized in that**
the backrest (3) and the seat element (2) in terms of the respective pivoting movements are coupled by a gear mechanism (6) such that, by pivoting the backrest (3) or the seat element (2) from one of the three respective positions, the pivoting of the seat element (2) or of the backrest (3) is enforced or unblocked.

5. Folding seat (1) according to Claim 4, **characterized in that**
- the gear mechanism (6) comprises a crank element (60) having a pin (60a), a blocking device (61) and a slotted wheel (62);
- the crank element (60) is rigidly connected to the seat element (2) such that the crank element (60) is rotated when the seat element (2) is pivoted, and the pin (60a) in the process is moved along a circular line;
- in the third position of the seat element (2), the blocking device (61) is in a blocking state, as a result of which the pivoting of the backrest (3) is blocked;
- in the third position of the seat element (2), the pin (60a) engages in the slot (62a) of the slotted wheel (62);
- the gear mechanism (6) is specified such that when pivoting the seat element (2) from the third position at least up to a predefined pivoting angle, the pin (60a) engages further in the slot (62a) and exerts a force on the slotted wheel (62), as a result of which the slotted wheel (62) is rotated;
- the blocking device (61) is coupled to the slotted wheel (62) in such a manner that, as a result of the corresponding rotation of the slotted wheel (62) when the predefined pivot angle is exceeded, the blocking state is released and the pivoting of the backrest (3) is unblocked.

6. Folding seat (1) according to Claim 4, **characterized in that**
- the gear mechanism (6) comprises a crank element (60, 63) having a guiding element (60a, 63c) which is fastened to the crank element (60, 63);
- the crank element (60, 63) is rigidly connected to the seat element (2) such that the crank element (60, 63) is rotated when the seat element (2) is pivoted, and the guiding element (60a, 63c) in the process is moved along a circular line;
- the backrest (3) comprises an elongate arm (30) which extends transversely to the rotation axis (31) of the backrest (3);
- the guiding element (60a, 63c) is connected to the arm (30) and is fastened to the arm (30) so as to be displaceable along a longitudinal axis of the arm (30);
- the gear mechanism (60) is specified such that, when pivoting the seat element (2), the guiding element (60a, 63c) is displaced along the longitudinal axis of the arm (30) and simultaneously exerts on the arm (30) a leverage force which forces the backrest (3) to pivot about the rotation axis (31) thereof.

7. Folding seat according to Claim 6, **characterized in that** the guiding element is a bracket (63c) which encompasses the arm (30) and which by way of a rotary joint is fastened to the crank element (63).

8. Folding seat (1) according to Claim 6, **characterized in that**
- the guiding element is a pin (60a);
- the arm (30) has an elongate slot (32) which extends along the longitudinal axis of the arm (30);
- the pin (60a) engages in the slot (32) and is mounted so as to be displaceable along the slot (32).

9. Folding seat (1) according to one of Claims 6 to 8, **characterized in that**
- the arm (30) has at least one detent (33) such that the guiding element (60a, 63c) is displaceable along the longitudinal axis of the arm (30) only up to the detent (33) ;
- in the first as well as in the second position of the seat element (2), the guiding element (60a, 63c) impacts a detent (33).

10. Folding seat according to Claim 4, **characterized in that**
- the gear mechanism (6) comprises a first gear (64) and a second gear (65);
- the first gear (64) is rigidly connected to the seat element (64) such that the first gear (64) is rotated when the seat element (2) is pivoted;
- the second gear (65) is rigidly connected to the backrest (3) such that the second gear (65) is rotated when the backrest (3) is pivoted;
- the first gear (64) and the second gear (65) engage in one another such that pivoting of the backrest (3) is enforced when the seat element (2) is pivoted.

11. Folding seat according to Claim 4, **characterized in that**
- the gear mechanism (6) comprises a first gear (64) and a rack (66);
- the first gear (64) is rigidly connected to the seat element (2) such that the first gear (64) is rotated when the seat element (2) is pivoted;
- the backrest (3) comprises an arm (30) which extends transversely to the rotation axis (31) of the backrest (3);
- the first gear (64) is connected to the arm (30) so as to be spaced apart from the rotation axis (31) of the backrest (3) by way of a rotary joint;
- the first gear (64) engages in the rack (66);
- the gear mechanism (6) is specified such that, when pivoting the seat element (2), the first gear (64) is forced to perform a translatory movement along the rack (65) and in the process exerts on the arm (30) a leverage force which forces the backrest (3) to pivot about the rotation axis (31) thereof.

12. Folding seat (1) according to one of Claims 2 to 11, **characterized in that**
- the seat element (2) from the third position thereof is pivotable in each case by at least 80° in mutually opposite directions;
- the backrest (3) from the third position thereof is pivotable in each case by at least 10° and at most 45° in mutually opposite directions.

13. Folding seat (1) according to one of Claims 2 to 12, **characterized by**
- a cantilever (40) for fastening the folding seat (1) laterally to a side wall of a rail vehicle, wherein
- a rotation axis (31) of the backrest (3) runs through the cantilever (40).

14. Folding seat system (10) comprising at least two folding seats (1), each according to one of the preceding claims, wherein the folding seats (1) are connected to one another.

15. Rail vehicle (100) comprising a folding seat (1) according to one of Claims 1 to 13.

## Revendications

1. Siège (1) rabattable pour un véhicule (100) ferroviaire, comprenant
- un dossier (3),
- un élément (2) de siège, dans lequel
- l'élément (2) de siège peut aller et venir en pivotant de manière réversible entre deux positions,
- dans une première et une deuxième position (2) de siège, l'élément (2) de siège est rabattu, de sorte que le siège (1) rabattable est ménagé pour qu'une personne s'assoit sur l'élément (2) de siège,
**caractérisé en ce que**
- l'élément (2) de siège peut aller et venir en pivotant de manière réversible entre trois positions, - dans une troisième position de l'élément (2) de siège, l'élément (2) de siège n'est pas rabattu et forme, ensemble avec le dossier (3), une surface d'adossement pour l'adossement d'une personne debout,
- l'élément (2) de siège est, dans sa première et deuxième positions, pivoté par rapport à la troisième position dans des sens contraires l'un à l'autre.

2. Siège (1) rabattable suivant la revendication 1, **caractérisé en ce que**
- le dossier (3) peut aller et venir en pivotant de manière réversible entre trois positions,
- les trois positions du dossier (3) correspondent aux trois positions de l'élément (2) de siège.

3. Siège (1) rabattable suivant la revendication 2, **caractérisé en ce que** le dossier (3) et l'élément (2) de siège peuvent aller et venir en pivotant entre les trois positions respectives indépendamment l'un de l'autre.

4. Siège (1) rabattable suivant la revendication 2, **caractérisé en ce que** le dossier (3) et l'élément (2) de siège sont accouplés en ce qui concerne les mouvements de pivotement respectifs par un mécanisme (6) de manière, en faisant pivoter le dossier (3) ou l'élément (2) de siège en dehors de l'une des trois positions respectives, à obliger ou à autoriser le pivotement de l'élément (2) de siège ou du dossier (3).

5. Siège (1) rabattable suivant la revendication 4, **caractérisé en ce que**
- le mécanisme (6) comprend un élément (60) de manivelle ayant une goupille (60a), un dispositif (61) d'arrêt et une roue (62) fendue,
- le dispositif (60) de manivelle est relié fixement à l'élément (2) de siège, de manière à ce que l'élément (60) de manivelle soit tourné lors du pivotement de l'élément (2) de siège et qu'ainsi la goupille (60a) se déplace le long d'une ligne circulaire,
- dans la troisième position de l'élément (2) de siège, le dispositif (61) d'arrêt est dans un état d'arrêt, grâce à quoi le pivotement du dossier (3) est bloqué,
- dans la troisième position de l'élément (2) de siège, la goupille (60a) pénètre dans la fente (62a) de la roue (62) fendue,
- le mécanisme (6) est tel que, lorsque l'élément (2) de siège sort en pivotant de la troisième position, au moins jusqu'à un angle de pivotement donné à l'avance, la goupille (60a) pénètre davantage dans la fente (62a) et applique une force à la roue (62) fendue, qui fait tourner la roue (62) fendue,
- le dispositif (61) d'arrêt est accouplé à la roue (62) fendue, de manière à ce que, par la rotation correspondant au dépassement de l'angle de pivotement donné à l'avance de la roue (62) fendue, il soit mis fin à l'état d'arrêt et que le pivotement du dossier (3) soit permis.

6. Siège (1) rabattable suivant la revendication 4, **caractérisé en ce que**
- le mécanisme (6) comprend un élément (60, 63) de manivelle avec un élément (60a, 63c) de guidage fixé à l'élément (60, 63) de manivelle,
- l'élément (60, 63) de manivelle est relié fixement à l'élément (2) de siège, de manière à ce que l'élément (60, 63) de manivelle soit tourné lorsque l'élément (2) de siège pivote et qu'ainsi l'élément (60a, 63c) de guidage se déplace le long d'une ligne circulaire,
- le dossier (3) comprend un bras (30) oblong, qui s'étend perpendiculairement à l'axe (31) de rotation du dossier (3),
- l'élément (60a, 63c) de guidage est relié au bras (30) et est fixé au bras (30) avec possibilité de coulisser le long d'un axe longitudinal du bras (30),
- le mécanisme (60) est tel que, lorsque l'élément (2) de siège pivote, l'élément (60a, 63c) de guidage coulisse le long de l'axe longitudinal du bras (30) et applique, en même temps, au bras (30) une force de levier, qui oblige le dossier (3) à pivoter autour de son axe (31) de rotation.

7. Siège (1) rabattable suivant la revendication 6, **caractérisé en ce que** l'élément de guidage est un crampon (63c), qui enveloppe le bras (30) et qui est fixé à l'élément (63) de manivelle par une articulation pivotante.

8. Siège (1) rabattable suivant la revendication 6, **caractérisé en ce que**
- l'élément de guidage est une goupille (60a),
- le bras (30) a une boutonnière (32), qui s'étend le long de l'axe longitudinal du bras (30),
- la goupille (60a) pénètre dans la boutonnière (32) et est montée coulissante le long de la boutonnière (32).

9. Siège (1) rabattable suivant l'une des revendications 6 à 8, **caractérisé en ce que**
- le bras (30) a au moins une butée (33), de manière à ce que l'élément (60a, 63c) de guidage ne puisse coulisser le long de l'axe longitudinal du bras (30) que jusqu'à la butée (33),
- tant dans la première que dans la deuxième position de l'élément (2) de siège, l'élément (60a, 63c) de guidage vient en butée sur une butée (33).

10. Siège (1) rabattable suivant la revendication 4, **caractérisé en ce que**
- le mécanisme (6) comprend une première roue (64) dentée et une deuxième roue (65) dentée,
- la première roue (64) dentée est reliée fixement à l'élément (64) de siège, de manière à ce que la première roue (64) dentée tourne, lorsque l'élément (2) de siège pivote,
- la deuxième roue (65) dentée est reliée fixement au dossier (3), de manière à ce que la deuxième roue (65) dentée tourne, lorsque le dossier (3) pivote,
- la première roue (64) dentée et la deuxième roue (65) dentée engrènent l'une dans l'autre, de manière à ce que, lors d'un pivotement de l'élément (2) de siège, le dossier (3) soit obligé de pivoter.

11. Siège (1) rabattable suivant la revendication 4, **caractérisé en ce que**
- le mécanisme (6) comprend une première roue (64) dentée et une crémaillère (66) dentée,
- la première roue (64) dentée est reliée fixement à l'élément (2) de siège, de manière à ce que la première roue (64) dentée tourne, lorsque l'élément (2) de siège pivote,
- le dossier (3) comprend un bras (30), qui s'étend transversalement à l'axe (31) de rotation du dossier (3),
- la première roue (64) dentée est, par une articulation pivotante, reliée au bras (30) à distance de l'axe (31) de rotation du dossier (3),
- la première roue (64) dentée engrène dans la crémaillère (66),
- le mécanisme est tel que, lorsque l'élément (2) de siège pivote, la première roue (64) dentée est forcée d'effectuer un mouvement de translation le long de la crémaillère (65) et ainsi d'appliquer au bras (30) une force de levier, qui oblige le dossier (3) à pivoter autour de son axe (31) de rotation.

12. Siège (1) rabattable suivant l'une des revendications 2 à 11, **caractérisé en ce que**
- l'élément (2) de siège peut pivoter à partir de sa troisième position de respectivement au moins 80° dans des sens contraires l'un à l'autre,
- le dossier (3) peut, à partir de sa troisième position, pivoter respectivement d'au moins 10° et d'au plus 45° dans des sens contraires l'un à l'autre.

13. Siège (1) rabattable suivant l'une des revendications 2 à 12, **caractérisé par**
- un porte-à-faux (40) pour la fixation latérale du siège (1) rabattable à une paroi latérale d'un véhicule ferroviaire, dans lequel
- un axe (31) de rotation du dossier (3) passe dans le porte-à-faux (40) .

14. Système (10) à siège rabattable, comprenant au moins deux sièges (1) rabattables, chacun respectivement suivant l'une des revendications précédentes, dans lequel les sièges (1) rabattables sont reliés entre eux.

15. Véhicule (100) ferroviaire, comprenant un siège (1) rabattable suivant l'une des revendications 1 à 13.
